(19) Europäisches Patentamt
European Patent Office
Office européen des brevets

(11) **EP 4 730 683 A1**

(12) **EUROPEAN PATENT APPLICATION**
published in accordance with Art. 153(4) EPC

(43) Date of publication:
**22.04.2026 Bulletin 2026/17**

(21) Application number: **24843421.9**

(22) Date of filing: **11.07.2024**

(51) International Patent Classification (IPC):
**H04L 1/1812** (2023.01)

(52) Cooperative Patent Classification (CPC):
**H04L 1/1854; H04L 1/1896**

(86) International application number:
**PCT/KR2024/009935**

(87) International publication number:
**WO 2025/018703 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 KR 20230091933**

(71) Applicant: **Samsung Electronics Co., Ltd.**
**Suwon-si, Gyeonggi-do 16677 (KR)**

(72) Inventors:
• **CHOI, Kyungjun**
**Suwon-si Gyeonggi-do 16677 (KR)**
• **KIM, Younsun**
**Suwon-si Gyeonggi-do 16677 (KR)**
• **JI, Hyoungju**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR DESIGNING HARQ CODEBOOK ACCORDING TO TERMINAL CAPABILITY IN WIRELESS COMMUNICATION SYSTEM**

(57) The disclosure relates to a 5G or 6G communication system for supporting a higher data transmission rate. More specifically, the present disclosure relates to a method performed by a user equipment (UE) in a wireless communication system, the method comprising the steps of: transmitting, to a base station, capability information on the maximum number of physical downlink shared channels (PDSCHs) that can be received in a single slot by the UE; receiving, from the base station, configuration information including first information including at least one slot offset value between each of reception slots of at least one PDSCH and a transmission slot of a hybrid automatic repeat request acknowledgement (HARQ-ACK) codebook and second information on the maximum number of PDSCHs scheduled to a single slot; determining one or more reception slots of the PDSCHs on the basis of the first information; generating a HARQ-ACK codebook including pieces of HARQ-ACK information corresponding in number to the maximum number of PDSCHs that can be scheduled to each of the determined one or more reception slots of the PDSCHs on the basis of the second information, wherein the HARQ-ACK information is configured for each of the determined one or more reception slots of the PDSCHs; and transmitting the generated HARQ-ACK codebook to the base station.

FIG.15

**Description**

[Technical Field]

The disclosure relates to operations of a user equipment (UE) and a base station in a wireless communication system. Specifically, the disclosure relates to a method for transmitting a HARQ-ACK indicating whether a physical downlink shared channel has been successfully received when a UE receives the physical downlink shared channel, and to a device capable of performing the same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, and with the advancement of mobile communication systems enabling the provision of diverse services, there is a growing need for effective methods to deliver these services.

[Disclosure of Invention]

[Technical Problem]

The disclosure is to provide a device and a method capable of effectively providing services in a mobile communication system.

[Solution to Problem]

To solve the above problem, according to the disclosure, a method performed by a user equipment (UE) in a wireless communication system may include: transmitting, to a base station, capability information on a maximum number of physical downlink shared channels (PDSCHs) receivable by the UE in one slot; receiving, from the base station, configuration information including first information including at least one slot offset value between each of at least one PDSCH reception slot and a transmission slot of a hybrid automatic repeat request acknowledgement (HARQ-ACK) codebook and second information on a maximum number of PDSCHs scheduled in one slot; determining at least one PDSCH reception slot, based on the first information; generating a HARQ-ACK codebook including as many pieces of HARQ-ACK information as a maximum number of PDSCHs schedulable in each of the determined at least one PDSCH reception slot, based on the second information, the HARQ-ACK information being configured for each of the determined at least one PDSCH reception slot; and transmitting the generated HARQ-ACK codebook to the base station.

A method performed by a base station in a wireless communication system may include: receiving, from a user equipment (UE), capability information on a maximum number of physical downlink shared channels (PDSCHs) receivable by the UE in one slot; transmitting, to the UE, configuration information including first information including at least one slot offset value between each of at least one PDSCH reception slot and a transmission slot of a hybrid automatic repeat request acknowledgement (HARQ-ACK) codebook and second information on a maximum number of PDSCH occasions scheduled in one slot; and based on the second information, receiving, from the UE, a HARQ-ACK codebook including as many pieces of HARQ-ACK information as a maximum number of PDSCHs schedulable in each of at least one PDSCH reception slot determined based on the first information, wherein the HARQ-ACK information may be configured for each of the determined at least one PDSCH reception slot.

A user equipment (UE) in a wireless communication system may include: a transceiver; and a controller connected to the transceiver, wherein the controller may be configured to: transmit, to a base station, capability information on a maximum number of physical downlink shared channels (PDSCHs) receivable by the UE in one slot to a base station; receive, from the base station, configuration information including first information including at least one slot offset value between each of at least one PDSCH reception slot and a transmission slot of a hybrid automatic repeat request acknowledgement (HARQ-ACK) codebook and second information on a maximum number of PDSCHs scheduled in one slot; determine at least one PDSCH reception slot, based on the first information; generate a HARQ-ACK codebook including as many pieces of HARQ-ACK information as a maximum number of PDSCHs schedulable in each of the determined at least one PDSCH reception slot, based on the second information, the HARQ-ACK information being configured for each of the determined at least one PDSCH reception slot; and transmit the generated HARQ-ACK codebook to the base station.

A base station in a wireless communication system may include: a transceiver; and a controller connected to the transceiver, wherein the controller may be configured to: receive, from a user equipment (UE), capability information on a maximum number of physical downlink shared channels (PDSCHs) receivable by the UE in one slot; transmit, to the UE, configuration information including first information including at least one slot offset value between each of at least one PDSCH reception slot and a transmission slot of a hybrid automatic repeat request acknowledgement (HARQ-ACK) codebook and second information on a maximum number of PDSCH occasions scheduled in one slot; and based on the second information, receive, from the UE, a HARQ-ACK codebook including as many pieces of HARQ-ACK information as a maximum number of PDSCHs schedulable in each of at least one PDSCH reception slot determined based on the first information, and the HARQ-ACK information may be configured for each of the determined at least one PDSCH reception slot.

EP 4 730 683 A1

[Advantageous Effects of Invention]

Embodiments set forth herein can provide a device and a method capable of effectively providing services in a mobile communication system.

[Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of a control resource set configuration of a downlink control channel in a wireless communication system according to an embodiment of the disclosure.
FIG. 5 illustrates a structure of a downlink control channel in a wireless communication system according to an embodiment of the disclosure.
FIG. 6 illustrates a method in which a base station and a UE transmit/receive data in consideration of a downlink data channel and a rate matching resource in a wireless communication system according to an embodiment of the disclosure.
FIG. 7 illustrates an example of frequency domain resource allocation with regard to a physical downlink shared channel (PDSCH) in a wireless communication system according to an embodiment of the disclosure.
FIG. 8 illustrates an example of time domain resource allocation with regard to a PDSCH in a wireless communication system according to an embodiment of the disclosure.
FIG. 9 illustrates an example of time domain resource allocation according to subcarrier spacings with regard to a data channel and a control channel in a wireless communication system according to an embodiment of the disclosure.
FIG. 10 illustrates radio protocol structures of a base station and a UE in single cell, carrier aggregation, and dual connectivity situations according to an embodiment of the disclosure.
FIG. 11A, FIG. 11B, and FIG. 11C illustrate a Type-1 HARQ-ACK codebook for transmission of a HARQ-ACK of a PDSCH according to an embodiment of the disclosure.
FIG. 12A and FIG. 12B illustrate generation of a HARQ-ACK codebook according to a UE capability according to an embodiment of the disclosure.
FIG. 13 illustrates a case in which a UE receives two or more PDSCHs having the same index in one slot according to an embodiment of the disclosure.
FIG. 14 illustrates a change of a HARQ-ACK codebook according to the maximum number of PDSCHs to process in one slot according to an embodiment of the disclosure.
FIG. 15 is a flowchart of generating a HARQ-ACK codebook according to a UE capability according to an embodiment of the disclosure.
FIG. 16 is a flowchart of selecting a HARQ-ACK codebook type according to an embodiment of the disclosure.
FIG. 17 illustrates a structure of a UE in a wireless communication system according to an embodiment of the disclosure.
FIG. 18 illustrates a structure of a base station in a wireless communication system according to an embodiment of the disclosure.

[Mode for the Invention]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discussion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving

4

network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems (5th generation communication system or new radio (NR)) to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, long-term evolution (LTE), LTE-advanced (LTE-A), or 5th generation (5G) systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system, mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. However, the above-described mMTC, URLLC, and eMBB are merely examples of different types of services, and service types to which the disclosure is applied are not limited to the above examples.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

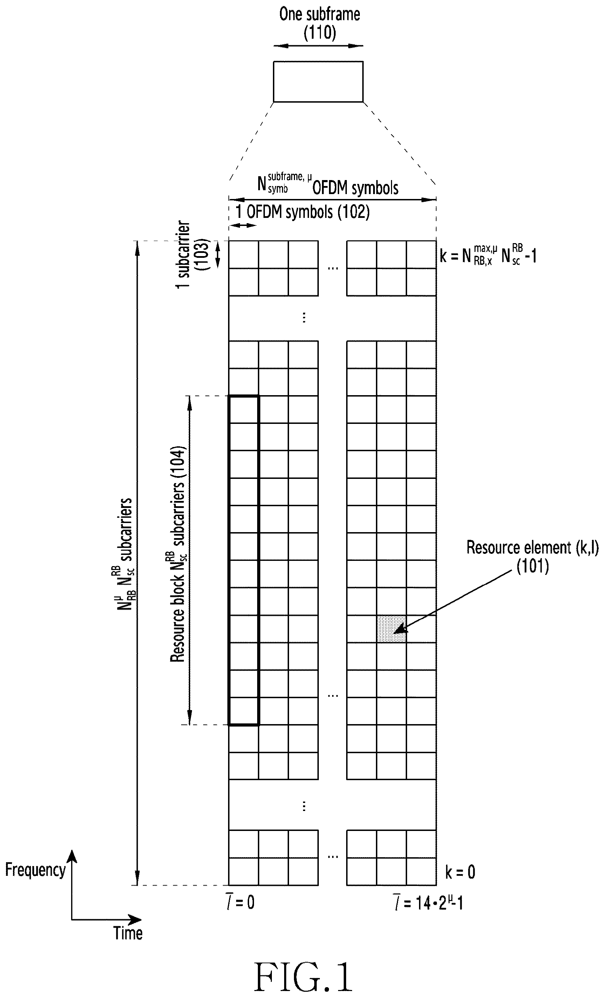

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

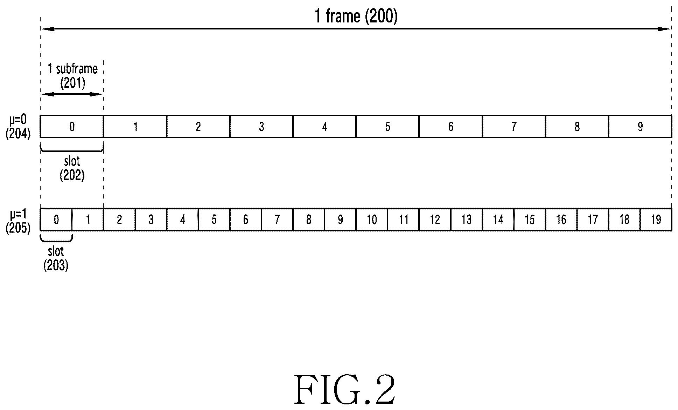

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

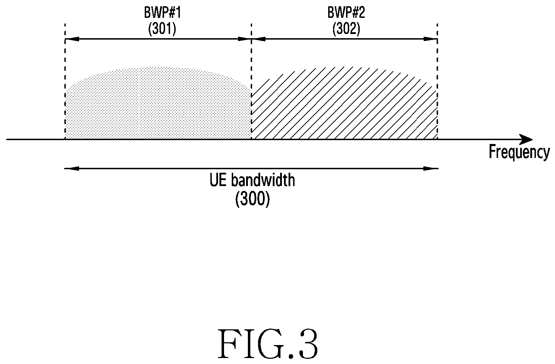

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
|---|---|
| bwp-Id<br>(bandwidth part identifier) | BWP-Id, |
| locationAndBandwidth<br>(bandwidth part location) | INTEGER (1..65536), |
| subcarrierSpacing<br>(subcarrier spacing) | ENUMERATED {n0, n1, n2, n3, n4, n5}, |
| cyclicPrefix<br>(cyclic prefix) | ENUMERATED { extended } |
| } | |

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by the 5G system may be used for various purposes.

According to an embodiment, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as in Table 3, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the changed new bandwidth part. If the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time (TBWP).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in a 5G system will be described.

An SS/PBCH block may refer to a physical layer channel block including a primary synchronization signal (PSS), a secondary synchronization signal (SSS), and a PBCH. Details thereof are as follows.

- PSS: is a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment - $[\lceil \log_2(N_{\mathrm{RB}}^{\mathrm{UL,BWP}}(N_{\mathrm{RB}}^{\mathrm{UL,BWP}}+1)/2)\rceil]$ bits |
| - Time domain resource assignment - X bits |

(continued)

> - Frequency hopping flag - 1 bit.
> - Modulation and coding scheme - 5 bits
> - New data indicator - 1 bit
> - Redundancy version - 2 bits
> - HARQ process number - 4 bits
> - Transmit power control (TPC) command for scheduled PUSCH - [2] bits
> - Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

> - Carrier indicator - 0 or 3 bits
> - UL/SUL indicator - 0 or 1 bit
> - Identifier for DCI formats - [1] bits
> - Bandwidth part indicator - 0, 1 or 2 bits
> - Frequency domain resource assignment
>
>       * For resource allocation type 0, $\left\lceil N_{\mathrm{RB}}^{\mathrm{UL,BWP}} / P \right\rceil$ bits
>
>       * For resource allocation type 1, $\left\lceil \log_2 (N_{\mathrm{RB}}^{\mathrm{UL,BWP}} (N_{\mathrm{RB}}^{\mathrm{UL,BWP}} + 1) / 2) \right\rceil$ bits
>
> - Time domain resource assignment -1, 2, 3, or 4 bits
> - Virtual resource block (VRB)-to-physical resource block (PRB) mapping - 0 or 1 bit, only for resource allocation type 1.
>       * 0 bit if only resource allocation type 0 is configured;
>       * 1 bit otherwise.
> - Frequency hopping flag - 0 or 1 bit, only for resource allocation type 1.
>       * 0 bit if only resource allocation type 0 is configured;
>       * 1 bit otherwise.
> - Modulation and coding scheme - 5 bits
> - New data indicator - 1 bit
> - Redundancy version - 2 bits
> - HARQ process number - 4 bits
> - 1st downlink assignment index- 1 or 2 bits
>       * 1 bit for semi-static HARQ-ACK codebook;
>       * 2 bits for dynamic HARQ-ACK codebook with single HARQ-ACK codebook.
> - 2nd downlink assignment index - 0 or 2 bits
>       * 2 bits for dynamic HARQ-ACK codebook with two HARQ-ACK sub-codebooks;
>       * 0 bit otherwise.
> - TPC command for scheduled PUSCH - 2 bits
>
> - SRS resource indicator - $\left\lceil \log_2 \left( \sum_{k=1}^{L_{\max}} \binom{N_{\mathrm{SRS}}}{k} \right) \right\rceil$ or $\left\lceil \log_2 (N_{\mathrm{SRS}}) \right\rceil$ bits
>
>     * $\left\lceil \log_2 \left( \sum_{k=1}^{L_{\max}} \binom{N_{\mathrm{SRS}}}{k} \right) \right\rceil$ bits for non-codebook based PUSCH transmission;
>
>     * $\left\lceil \log_2 (N_{\mathrm{SRS}}) \right\rceil$ bits for codebook based PUSCH transmission.

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit
- Frequency domain resource assignment -[

$$\left\lceil \log_2 (N_{RB}^{DL,BWP} (N_{RB}^{DL,BWP} + 1)/2) \right\rceil$$ ] bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

           * For resource allocation type 0, $\left\lceil N_{RB}^{DL,BWP} / P \right\rceil$ bits

           * For resource allocation type 1, $\left\lceil \log_2 (N_{RB}^{DL,BWP} (N_{RB}^{DL,BWP} + 1)/2) \right\rceil$

bits

- Time domain resource assignment -1, 2, 3, or 4 bits
- VRB-to-PRB mapping - 0 or 1 bit, only for resource allocation type 1.

           * 0 bit if only resource allocation type 0 is configured;

           * 1 bit otherwise.

- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits

For transport block 1:

(continued)

|  |  |
|---|---|
|  | - Modulation and coding scheme - 5 bits |
|  | - New data indicator - 1 bit |
|  | - Redundancy version - 2 bits |
| For transport block 2: |  |
|  | - Modulation and coding scheme - 5 bits |
|  | - New data indicator - 1 bit |
|  | - Redundancy version - 2 bits |
| - HARQ process number - 4 bits |  |
| - Downlink assignment index - 0 or 2 or 4 bits |  |
| - TPC command for scheduled PUCCH - 2 bits |  |
| - PUCCH resource indicator - 3 bits |  |
| - PDSCH-to-HARQ _feedback timing indicator - 3 bits |  |
| - Antenna ports - 4, 5 or 6 bits |  |
| - Transmission configuration indication - 0 or 3 bits |  |
| - SRS request - 2 bits |  |
| - CBG transmission information - 0, 2, 4, 6, or 8 bits |  |
| - CBG flushing out information - 0 or 1 bit |  |
| - DMRS sequence initialization - 1 bit |  |

[PDCCH: CORESET, REG, CCE, and Search Space]

Hereinafter, a downlink control channel in a 5G communication system will be described in more detail with reference to the accompanying drawings.

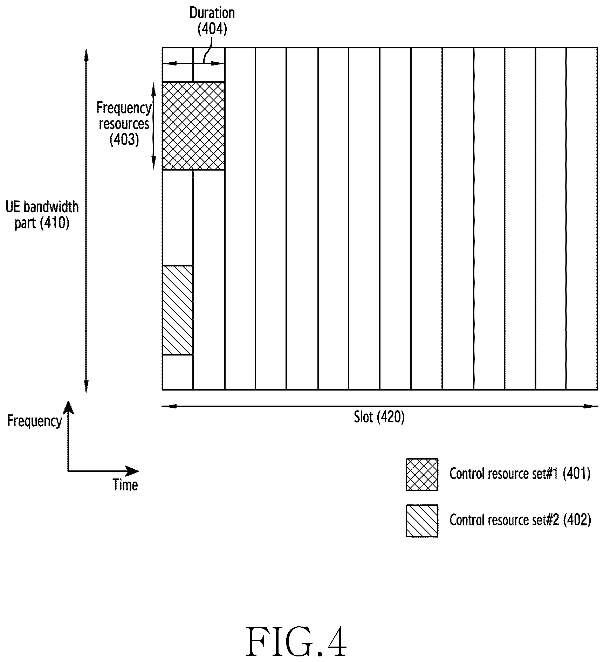

FIG. 4 illustrates an example of control resource set configuration of a downlink control channel in a wireless communication system according to an embodiment of the disclosure. FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

```
ControlResourceSet ::=                    SEQUENCE {
   -- Corresponds to L1 parameter 'CORESET-ID'


   controlResourceSetId                   ControlResourceSetId,
   (control resource set identity))
   frequencyDomainResources               BIT STRING (SIZE (45)),
```

```
   (frequency domain resource assignment information)
   duration                               INTEGER (1..maxCoReSetDuration),
   (time domain resource assignment information )
   cce-REG-MappingType                          CHOICE {
   (CCE-to-REG mapping scheme)
      interleaved                         SEQUENCE {
         reg-BundleSize                      ENUMERATED {n2, n3, n6},
         (REG bundle size)
         precoderGranularity                 ENUMERATED   {sameAsREG-
   bundle, allContiguousRBs},
         interleaverSize                     ENUMERATED {n2, n3, n6}
         (interleaver size)
         shiftIndex                 INTEGER(0..maxNrofPhysicalResourceBlocks-1)
         OPTIONAL
         (interleaver shift)
      },
      nonInterleaved                        NULL
   },
   tci-StatesPDCCH                        SEQUENCE(SIZE    (1..maxNrofTCI-
      StatesPDCCH)) OF TCI-StateId               OPTIONAL,
   (QCL configuration information)
   tci-PresentInDCI                       ENUMERATED {enabled}
         OPTIONAL,       -- Need S
}
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

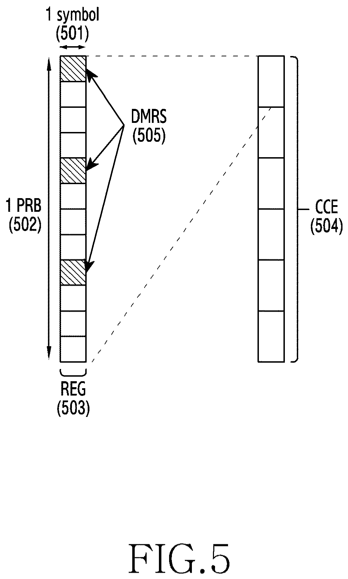

FIG. 5 illustrates a structure of a downlink control channel in a wireless communication system according to an embodiment of the disclosure.

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 9 below.

[Table 9]

| |
|---|
| SearchSpace ::=                               SEQUENCE { |
|   -- Identity of the search space. SearchSpaceId = 0 identifies the SearchSpace configured via |
|     PBCH (MIB) or ServingCellConfigCommon. |
|   searchSpaceId                               SearchSpaceId, |

```
(search space identity)
controlResourceSetId                          ControlResourceSetId,
(control resource set identity)
monitoringSlotPeriodicityAndOffset            CHOICE {
(monitoring slot level periodicity)
    sl1                                           NULL,
    sl2                                           INTEGER (0..1),
    sl4                                           INTEGER (0..3),
    sl5                                       INTEGER (0..4),
    sl8                                           INTEGER (0..7),
    sl10                                      INTEGER (0..9),
    sl16                                      INTEGER (0..15),
    sl20                                      INTEGER (0..19)
}
        OPTIONAL,
duration(monitoring duration)                     INTEGER (2..2559)
monitoringSymbolsWithinSlot                       BIT STRING (SIZE (14))
        OPTIONAL,
(monitoring symbols within slot)
nrofCandidates                                SEQUENCE {
(number of PDCCH candidates for each aggregation level)
    aggregationLevel1                         ENUMERATED {n0, n1, n2, n3, n4, n5,
    n6, n8},
    aggregationLevel2                         ENUMERATED {n0, n1, n2, n3, n4, n5,
    n6, n8},
    aggregationLevel4                         ENUMERATED {n0, n1, n2, n3, n4, n5,
    n6, n8},
    aggregationLevel8                         ENUMERATED {n0, n1, n2, n3, n4, n5,
    n6, n8},
    aggregationLevel16                        ENUMERATED {n0, n1, n2, n3, n4, n5,
    n6, n8}
},

searchSpaceType                               CHOICE {
(search space type)
    -- Configures this search space as common search space (CSS) and DCI formats to
    monitor.
    common                                        SEQUENCE {
(common search space)
    }
    ue-Specific                               SEQUENCE {
(UE-specific search space)
```

```
            -- Indicates whether the UE monitors in this USS for DCI formats 0-0 and 1-0 or for

        formats 0-1 and 1-1.

            formats                                    ENUMERATED {formats0-0-And-1-

        0, formats0-1-And-1-1},

            ...

            }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given in Table 10 below, for example.

[Table 10]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

(continued)

| DCI format | Usage |
|---|---|
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G system, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, ..., M_{s,max}^{(L)} - 1$ : PDCCH candidate index at aggregation level L
- $i = 0, ..., L - 1$
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$ , $A_p = 39827$ *for pmod3 = 0* , $A_p = 39829$ *for pmod3 = 1*, $A_p = 39839$ *for pmod3 = 2, D = 65537*
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDCCH: BD/CCE limit]

If there are multiple search space sets configured for a UE, the following conditions may be considered in connection with a method for determining a search space set to be monitored by the UE.
If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^\mu$ of PDCCH candidates that the UE can monitor may follow Table 11 given below if the same is defined with reference to a slot in a cell configured to have a subcarrier spacing of $15 \cdot 2^\mu$ kHz, and may follow Table 12 given below if the same is defined with reference to a span.

[Table 11]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 12]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^\mu$ of CCEs constituting the entire search space (as used herein, the entire search space refers to the entire CCE set corresponding to a union domain of multiple search space sets) may follow Table 13 given below if the same is defined with reference to a slot in a cell configured to have a subcarrier spacing of $15 \cdot 2^\mu$ kHz, and may follow Table 14 given below if the same is defined with reference to a span.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific time point may be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific time point. If condition A is not satisfied at a specific time point, the UE may select and monitor only some of search space sets configured to satisfy condition A at the corresponding time point, and the base station may transmit a PDCCH to the selected search space set.

A method for selecting some search spaces from all configured search space sets may follow methods given below.

If condition A regarding a PDCCH fails to be satisfied at a specific time point (slot), the UE (or the base station) may preferentially select a search space set having a search space type configured as a common search space, among search space sets existing at the corresponding time point, over a search space set configured as a UE-specific search space.

If all search space sets configured as common search spaces have been selected (that is, if condition A is satisfied even after all search spaces configured as common search spaces have been selected), the UE (or the base station) may select search space sets configured as UE-specific search spaces. If there are multiple search space sets configured as UE-specific search spaces, a search space set having a lower search space set index may have a higher priority. The UE (or base station) may select UE-specific search space sets as long as condition A is satisfied, in consideration of the priority.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

## Rate matching operation

- The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

## Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, resource A is {resource#1, resource#2, resource#3, resource#4}, and resource B is {resource#3, resource#5}, the base station may map symbol sequence A {symbol#1, symbol#2, symbol#3, symbol#4} to resource A {resource#1, resource#2, resource#3, resource#4}, respectively, may transmit only symbol sequence {symbol#1, symbol#2, symbol#4} corresponding to the remaining resources {resource#1, resource#2, resource#4} other than {resource#3} (corresponding to resource C) among resource A, and may not transmit {symbol#3} mapped to {resource#3} (corresponding to resource C). Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining region other than resource C among the resource region A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

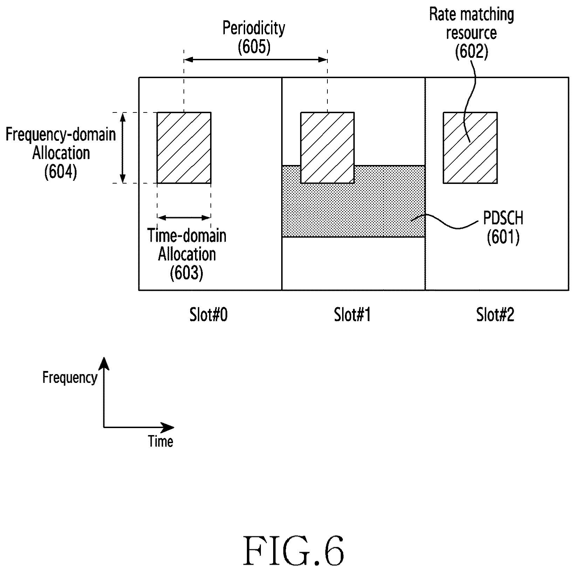

FIG. 6 illustrates a method in which a base station and a UE transmit/receive data in consideration of a downlink data channel and a rate matching resource in a wireless communication system according to an embodiment of the disclosure.

FIG. 6 illustrates a downlink data channel (PDSCH) 601and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE,through DCI, of whether the PDSCH will be rate-matched in the configured rate matching resource part through an additional configuration (for example, corresponding to"rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

### RB symbol level

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

## RE level

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.
- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. In NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 15 shows a ServingCellConfig IE including the CRS patterns, and Table 16 shows a RateMatchPatternLTE-CRS IE including at least one parameter regarding CRS patterns.

[Table 15]

```
ServingCellConfig ::=                    SEQUENCE {
        tdd-UL-DL-ConfigurationDedicated                    TDD-UL-DL-ConfigDedicated
OPTIONAL,     -- Cond TDD
        initialDownlinkBWP                                  BWP-DownlinkDedicated
OPTIONAL,    -- Need M
        downlinkBWP-ToReleaseList            SEQUENCE (SIZE (1..maxNrofBWPs)) OF BWP-Id
OPTIONAL,     -- Need N
        downlinkBWP-ToAddModList             SEQUENCE (SIZE (1..maxNrofBWPs)) OF BWP-
Downlink                     OPTIONAL,     -- Need N
        firstActiveDownlinkBWP-Id                                          BWP-Id
OPTIONAL,     -- Cond SyncAndCellAdd
        bwp-InactivityTimer                       ENUMERATED {ms2, ms3, ms4, ms5, ms6,
ms8, ms10, ms20, ms30,

ms40,ms50, ms60, ms80,ms100, ms200,ms300, ms500,

ms750, ms1280, ms1920, ms2560, spare10, spare9, spare8,

spare7, spare6, spare5, spare4, spare3, spare2, spare1 }       OPTIONAL,     --Need R
        defaultDownlinkBWP-Id                                             BWP-Id
OPTIONAL,     -- Need S
```

```
    uplinkConfig                                                    UplinkConfig
OPTIONAL,      -- Need M
    supplementaryUplink                                             UplinkConfig
OPTIONAL,      -- Need M
    pdcch-ServingCellConfig                          SetupRelease { PDCCH-ServingCellConfig }
OPTIONAL,      -- Need M
    pdsch-ServingCellConfig                          SetupRelease { PDSCH-ServingCellConfig }
OPTIONAL,      -- Need M
    csi-MeasConfig                                      SetupRelease { CSI-MeasConfig }
OPTIONAL,      -- Need M
    sCellDeactivationTimer                   ENUMERATED {ms20, ms40, ms80, ms160,
ms200, ms240,
                                                                  ms320,    ms400,
ms480, ms520, ms640, ms720,
                                                                  ms840,  ms1280,
spare2,spare1}                  OPTIONAL,      -- Cond ServingCellWithoutPUCCH
    crossCarrierSchedulingConfig                          CrossCarrierSchedulingConfig
OPTIONAL,      -- Need M
    tag-Id                                                 TAG-Id,
    dummy                                                 ENUMERATED {enabled}
OPTIONAL,      -- Need R
    pathlossReferenceLinking                               ENUMERATED {spCell, sCell}
OPTIONAL,      -- Cond SCellOnly
    servingCellMO                                              MeasObjectId
OPTIONAL,      -- Cond MeasObject

    ...,
    [[
    lte-CRS-ToMatchAround                          SetupRelease { RateMatchPatternLTE-CRS }
OPTIONAL,      -- Need M
```

```
    rateMatchPatternToAddModList                                  SEQUENCE     (SIZE
(1..maxNrofRateMatchPatterns)) OF RateMatchPattern          OPTIONAL,      -- Need N
    rateMatchPatternToReleaseList                                 SEQUENCE     (SIZE
(1..maxNrofRateMatchPatterns)) OF RateMatchPatternId        OPTIONAL,      -- Need N
    downlinkChannelBW-PerSCS-List                  SEQUENCE (SIZE (1..maxSCSs)) OF SCS-
SpecificCarrier                    OPTIONAL     -- Need S
    ]],
    [[
    supplementaryUplinkRelease                                    ENUMERATED   {true}
OPTIONAL,      -- Need N
    tdd-UL-DL-ConfigurationDedicated-IAB-MT-r16        TDD-UL-DL-ConfigDedicated-IAB-MT-r16
OPTIONAL,      -- Cond TDD_IAB
    dormantBWP-Config-r16                          SetupRelease { DormantBWP-Config-r16 }
OPTIONAL,      -- Need M
    ca-SlotOffset-r16                                    CHOICE {
        refSCS15kHz                                          INTEGER (-2..2),
        refSCS30KHz                                          INTEGER (-5..5),
        refSCS60KHz                                          INTEGER (-10..10),
        refSCS120KHz                                         INTEGER (-20..20)
    }
OPTIONAL,      -- Cond AsyncCA
    channelAccessConfig-r16                          SetupRelease { ChannelAccessConfig-r16
}                          OPTIONAL,      -- Need M
    intraCellGuardBandsDL-List-r16                            SEQUENCE (SIZE (1..maxSCSs)) OF
IntraCellGuardBandsPerSCS-r16                  OPTIONAL,      -- Need S
    intraCellGuardBandsUL-List-r16                            SEQUENCE (SIZE (1..maxSCSs)) OF
IntraCellGuardBandsPerSCS-r16                  OPTIONAL,      -- Need S
    csi-RS-ValidationWith-DCI-r16                            ENUMERATED {enabled}
OPTIONAL,      -- Need R
    lte-CRS-PatternList1-r16                          SetupRelease { LTE-CRS-PatternList-r16
}                          OPTIONAL,      -- Need M
```

```
        lte-CRS-PatternList2-r16                              SetupRelease { LTE-CRS-PatternList-
r16 }                                OPTIONAL,    -- Need M
        crs-RateMatch-PerCORESETPoolIndex-r16                          ENUMERATED    {enabled}
OPTIONAL,     -- Need R
        enableTwoDefaultTCI-States-r16                                 ENUMERATED  {enabled}
OPTIONAL,     -- Need R
        enableDefaultTCI-StatePerCoresetPoolIndex-r16                  ENUMERATED    {enabled}
OPTIONAL,     -- Need R
        enableBeamSwitchTiming-r16                                       ENUMERATED  {true}
OPTIONAL,     -- Need R
        cbg-TxDiffTBsProcessingType1-r16                               ENUMERATED    {enabled}
OPTIONAL,     -- Need R
        cbg-TxDiffTBsProcessingType2-r16                               ENUMERATED    {enabled}
OPTIONAL      -- Need R
    ]]
}
```

[Table 16]

| | |
|---|---|
| – ***RateMatchPatternLTE-CRS*** | |

The IE *RateMatchPatternLTE-CRS* is used to configure a pattern to rate match around LTE CRS. See TS 38.214 [19], clause 5.1.4.2.

**RateMatchPatternLTE-CRS information element**

```
-- ASN1START
-- TAG-RATEMATCHPATTERNLTE-CRS-START

RateMatchPatternLTE-CRS ::=            SEQUENCE {
    carrierFreqDL                             INTEGER (0..16383),
    carrierBandwidthDL                        ENUMERATED {n6, n15, n25, n50, n75,
n100, spare2, spare1},
    mbsfn-SubframeConfigList                  EUTRA-MBSFN-SubframeConfigList
OPTIONAL,    -- Need M
    nrofCRS-Ports                             ENUMERATED {n1, n2, n4},
    v-Shift                                   ENUMERATED {n0, n1, n2, n3,
n4, n5}
    }

LTE-CRS-PatternList-r16 ::=            SEQUENCE (SIZE (1..maxLTE-CRS-Patterns-r16)) OF
RateMatchPatternLTE-CRS

-- TAG-RATEMATCHPATTERNLTE-CRS-STOP
-- ASN1STOP
```

| *RateMatchPatternLTE-CRS* field descriptions |
|---|
| ***carrierBandwidthDL*** <br> BW of the LTE carrier in number of PRBs (see TS 38.214 [19], clause 5.1.4.2). |
| ***carrierFreqDL*** <br> Center of the LTE carrier (see TS 38.214 [19], clause 5.1.4.2). |
| ***mbsfn-SubframeConfigList*** <br> LTE MBSFN subframe configuration (see TS 38.214 [19], clause 5.1.4.2). |
| ***nrofCRS-Ports*** <br> Number of LTE CRS antenna port to rate-match around (see TS 38.214 [19], clause 5.1.4.2). |
| ***v-Shift*** <br> Shifting value v-shift in LTE to rate match around LTE CRS (see TS 38.214 [19], clause 5.1.4.2). |

[PDSCH: regarding frequency resource allocation]

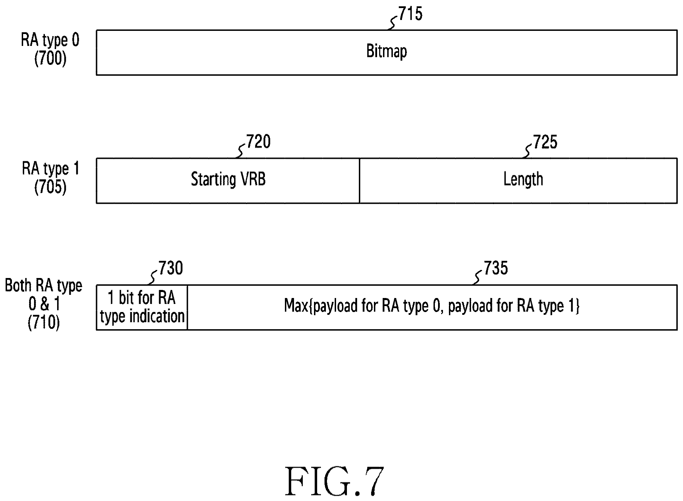

FIG. 7 illustrates an example of frequency domain resource allocation with regard to a PDSCH in a wireless communication system according to an embodiment of the disclosure.

FIG. 7 illustrates three frequency domain resource allocation methods of type 0 700, type 1 705, and dynamic switch 710 which can be configured through an upper layer in an NR wireless communication system.

Referring to FIG. 7, in the case in which a UE is configured to use only resource type 0 through higher layer signaling (700), partial downlink control information (DCI) for allocating a PDSCH to the UE include a bitmap including $N_{RBG}$ bits. The conditions for this will be described again later. As used herein, $N_{RBG}$ refers to the number of resource block groups (RBGs) determined according to the BWP size allocated by a BWP indicator and upper layer parameter rbg-Size, as in Table 17 below, and data is transmitted in RBGs indicated as "1" by the bitmap.

26

[Table 17]

| Bandwidth Part Size | Configuration 1 | Configuration 2 |
|:---:|:---:|:---:|
| 1-36 | 2 | 4 |
| 37 - 72 | 4 | 8 |
| 73 - 144 | 8 | 16 |
| 145 - 275 | 16 | 16 |

In the case in which the UE is configured to use only resource type 1 through upper layer signaling (705), partial DCI includes frequency domain resource allocation information including $\lceil log_2(N_{RB}^{DL,BWP}(N_{RB}^{DL,BWP} + 1)/2\rceil$ bits. The conditions for this will be described again later. The base station may thereby configure a starting VRB 720 and the length 725 of a frequency domain resource allocated continuously therefrom.

In the case in which the UE is configured to use both resource type 0 and resource type 1 through upper layer signaling (710), partial DCI for allocating a PDSCH to the corresponding UE includes frequency domain resource allocation information including as many bits as the larger value 715 between the payload 735 for configuring resource type 0 and the payload 720 and 725 for configuring resource type 1. The conditions for this will be described again later. One bit may be added to the foremost part (MSB) of the frequency domain resource allocation information inside the DCI, and if the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 18 or Table 19 below may be transmitted from the base station to the UE.

[Table 18]

```
PDSCH-TimeDomainResourceAllocationList information element
   PDSCH-TimeDomainResourceAllocationList ::=     SEQUENCE (SIZE(1..maxNrofDL-
Allocations)) OF
   PDSCH-TimeDomainResourceAllocation

   PDSCH-TimeDomainResourceAllocation ::=        SEQUENCE {
          k0
INTEGER(0..32)
       OPTIONAL,    -- Need S
           (PDCCH-to-PDSCH timing, slot unit)
    mappingType                              ENUMERATED {typeA, typeB},
          (PDSCH mapping type)
   startSymbolAndLength                       INTEGER (0..127)
   (start symbol and length of PDSCH)
   }
```

[Table 19]

| PUSCH-TimeDomainResourceAllocationList information element |
|---|
| PUSCH-TimeDomainResourceAllocationList ::=   SEQUENCE (SIZE(1..maxNrofUL-Allocations)) OF<br>PUSCH-TimeDomainResourceAllocation<br><br>PUSCH-TimeDomainResourceAllocation ::=   SEQUENCE {<br>        k2<br>INTEGER(0..32)                        OPTIONAL,   -- Need S<br>    (PDCCH-to-PUSCH timing, slot unit)<br>        mappingType                           ENUMERATED {typeA, typeB},<br>            (PUSCH mapping type)<br>    startSymbolAndLength                      INTEGER (0..127)<br>            (start symbol and length of PUSCH)<br>    } |

The base station may notify the UF of one of the entries of the table regarding time domain resource allocation information described above through L1 signaling (for example, DCI). For example, this may be indicated via a "time domain resource allocation" filed within DCI. The UE may acquire time domain resource allocation information regarding a PDSCH or PUSCH, based on the DCI acquired from the base station.

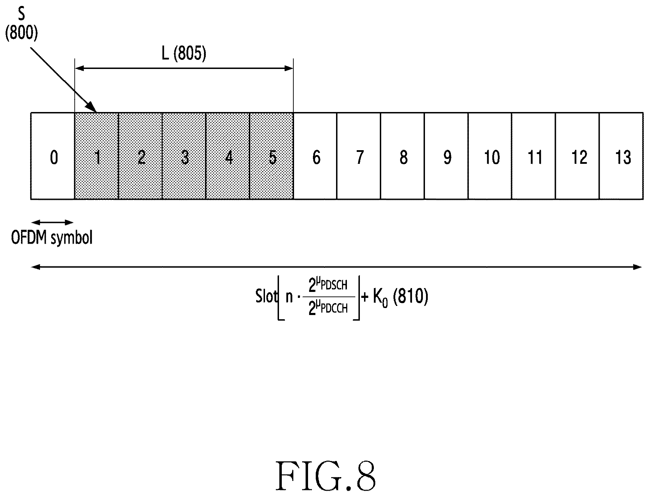

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset ($K_0$) value, and the OFDM symbol start location 800 and length 805 within one slot dynamically indicated through DCI.

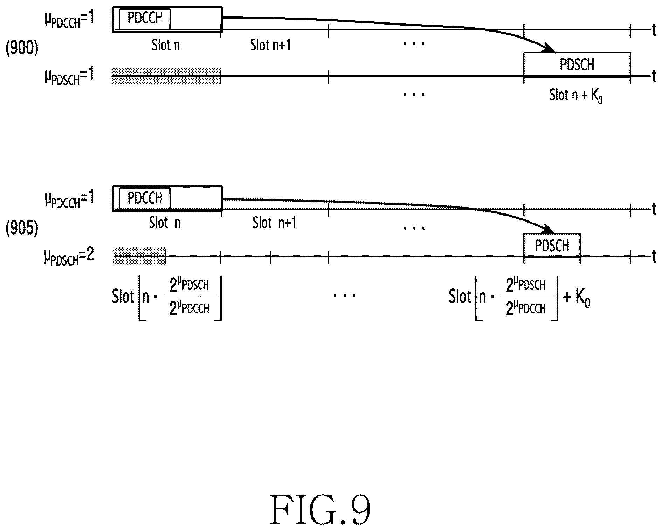

FIG. 9 illustrates an example of time domain resource allocation according to subcarrier spacings with regard to a data channel and a control channel in a wireless communication system according to an embodiment of the disclosure.

Referring to FIG. 9, if the data channel and the control channel have the same subcarrier spacing (900, $\mu_{PDSCH}$ $=\mu_{PDCCH}$), the slot number for data and that for control are identical, and the base station and the UE may accordingly generate a scheduling offset in conformity with a predetermined slot offset K0. Contrarily, if the data channel and the control channel have different subcarrier spacings (905, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through upper signaling. If PUSCH transmission is operated by a configured grant, parameters applied to the PUSCH transmission are applied through configuredGrantConfig (upper signaling) in Table 16 except for dataScramblingIdentityPUSCH, txConfig, codebookSubset, maxRank, and scaling of UCI-OnPUSCH, which are provided by pusch-Config (upper signaling) in Table 17. If provided with transformPrecoder inside configuredGrantConfig (upper signaling) in Table 20, the UE applies tp-pi2BPSK inside pusch-Config in Table 21 to PUSCH transmission operated by a configured grant.

[Table 20]

```
ConfiguredGrantConfig ::=                    SEQUENCE {
        frequencyHopping                             ENUMERATED {intraSlot, interSlot}
OPTIONAL,    -- Need S,
     cg-DMRS-Configuration                   DMRS-UplinkConfig,
     mcs-Table                                      ENUMERATED {qam256,
qam64LowSE}                                           OPTIONAL,    -- Need S
        mcs-TableTransformPrecoder          ENUMERATED {qam256, qam64LowSE}
OPTIONAL,    -- Need S
        uci-OnPUSCH                                  SetupRelease { CG-UCI-
OnPUSCH }                                            OPTIONAL,    -- Need M
        resourceAllocation                  ENUMERATED { resourceAllocationType0,
resourceAllocationType1, dynamicSwitch },
        rbg-Size                                     ENUMERATED {config2}
OPTIONAL,    -- Need S
        powerControlLoopToUse               ENUMERATED {n0, n1},
        p0-PUSCH-Alpha                            P0-PUSCH-AlphaSetId,
        transformPrecoder                         ENUMERATED {enabled,
disabled}                                            OPTIONAL,    -- Need S
        nrofHARQ-Processes                        INTEGER(1..16),
```

```
        repK                                              ENUMERATED {n1,
n2, n4, n8},
        repK-RV                                           ENUMERATED {s1-
0231, s2-0303, s3-0000}                        OPTIONAL,    -- Need R
        periodicity                                       ENUMERATED {
                                                            sym2, sym7,
sym1x14, sym2x14, sym4x14, sym5x14, sym8x14, sym10x14, sym16x14, sym20x14,
                                                            sym32x14,
sym40x14, sym64x14, sym80x14, sym128x14, sym160x14, sym256x14, sym320x14,
sym512x14,
                                                            sym640x14,
sym1024x14, sym1280x14, sym2560x14, sym5120x14,
                                                          sym6, sym1x12,
sym2x12, sym4x12, sym5x12, sym8x12, sym10x12, sym16x12, sym20x12, sym32x12,
                                                            sym40x12,
sym64x12, sym80x12, sym128x12, sym160x12, sym256x12, sym320x12, sym512x12,
sym640x12,
                                                            sym1280x12,
sym2560x12
        },
        configuredGrantTimer                              INTEGER (1..64)
OPTIONAL,    -- Need R
        rrc-ConfiguredUplinkGrant                         SEQUENCE {
            timeDomainOffset                                  INTEGER (0..5119),
            timeDomainAllocation                              INTEGER   (0..15),
            frequencyDomainAllocation                     BIT STRING (SIZE(18)),
            antennaPort                                           INTEGER
(0..31),
            dmrs-SeqInitialization                            INTEGER (0..1)
OPTIONAL,    -- Need R
            precodingAndNumberOfLayers                        INTEGER (0..63),
            srs-ResourceIndicator                             INTEGER (0..15)
```

```
OPTIONAL,    -- Need R
        mcsAndTBS
INTEGER (0..31),
        frequencyHoppingOffset                                    INTEGER (1..
maxNrofPhysicalResourceBlocks-1)               OPTIONAL,    -- Need R
        pathlossReferenceIndex                                    INTEGER
(0..maxNrofPUSCH-PathlossReferenceRSs-1),
        ...
        }
OPTIONAL,    -- Need R
        ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 21, which is upper signaling, is"codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 21, the UE does not expect scheduling through DCI format 0_1.

[Table 21]

```
PUSCH-Config ::=                                      SEQUENCE {
     dataScramblingIdentityPUSCH                          INTEGER (0..1023)
OPTIONAL,     -- Need S
     txConfig                                                         ENUMERATED
{codebook, nonCodebook}                                  OPTIONAL,     -- Need
S
     dmrs-UplinkForPUSCH-MappingTypeA            SetupRelease { DMRS-
UplinkConfig }                                              OPTIONAL,     -- Need M
     dmrs-UplinkForPUSCH-MappingTypeB            SetupRelease { DMRS-
UplinkConfig }                                              OPTIONAL,     -- Need M

     pusch-PowerControl                                    PUSCH-PowerControl
OPTIONAL,     -- Need M
     frequencyHopping                                          ENUMERATED
{intraSlot, interSlot}                                    OPTIONAL,     -- Need S
     frequencyHoppingOffsetLists              SEQUENCE (SIZE (1..4)) OF
INTEGER (1.. maxNrofPhysicalResourceBlocks-1)
OPTIONAL,     -- Need M
     resourceAllocation                             ENUMERATED
{ resourceAllocationType0, resourceAllocationType1, dynamicSwitch},
     pusch-TimeDomainAllocationList            SetupRelease { PUSCH-
TimeDomainResourceAllocationList }          OPTIONAL,     -- Need M
     pusch-AggregationFactor                        ENUMERATED { n2, n4, n8 }
OPTIONAL,     -- Need S
     mcs-Table                                               ENUMERATED
{qam256, qam64LowSE}                                     OPTIONAL,     --
Need S
     mcs-TableTransformPrecoder               ENUMERATED {qam256,
qam64LowSE}                                              OPTIONAL,     -- Need S
     transformPrecoder                                    ENUMERATED {enabled,
disabled}                                                OPTIONAL,     -- Need S
     codebookSubset                                       ENUMERATED
{fullyAndPartialAndNonCoherent, partialAndNonCoherent,nonCoherent}
OPTIONAL, -- Cond codebookBased
     maxRank                                                      INTEGER (1..4)
OPTIONAL, -- Cond codebookBased
     rbg-Size                                                       ENUMERATED
{ config2}                                               OPTIONAL, -- Need S
     uci-OnPUSCH                                              SetupRelease { UCI-
OnPUSCH}                                                 OPTIONAL, -- Need M
     tp-pi2BPSK                                               ENUMERATED
{enabled}                                                OPTIONAL, -- Need S
     ...
}
```

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, the UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

= With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 2 given below.

$$[\text{Equation 2}]$$
$$T_{\text{proc},2} = \max((\, N_2 + d_{2,1} + d_2)(\, 2048 + 144\,)\, \kappa 2^{-\mu}\, T_c + T_{\text{ext}} + T_{\text{switch}},\, d_{2,2}\,)$$

Each parameter in $T_{\text{proc},2}$ described above in Equation 2 may have the following meaning.

-    $N_2$: the number of symbols determined according to UE processing capability 1 or 2, based on the UE's capability, and numerology $\mu$. $N_2$ may have a value in Table 22 if UE processing capability 1 is reported according to the UE's capability report, and may have a value in Table 23 if UE processing capability 2 is reported, and if availability of UE processing capability 2 is configured through upper layer signaling.

[Table 22]

| $\mu$ | PUSCH preparation time $N_2$ [symbols] |
|---|---|
| 0 | 10 |
| 1 | 12 |
| 2 | 23 |
| 3 | 36 |

[Table 23]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3$ $Hz$, $N_f = 4096$.
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[Regarding CA/DC]

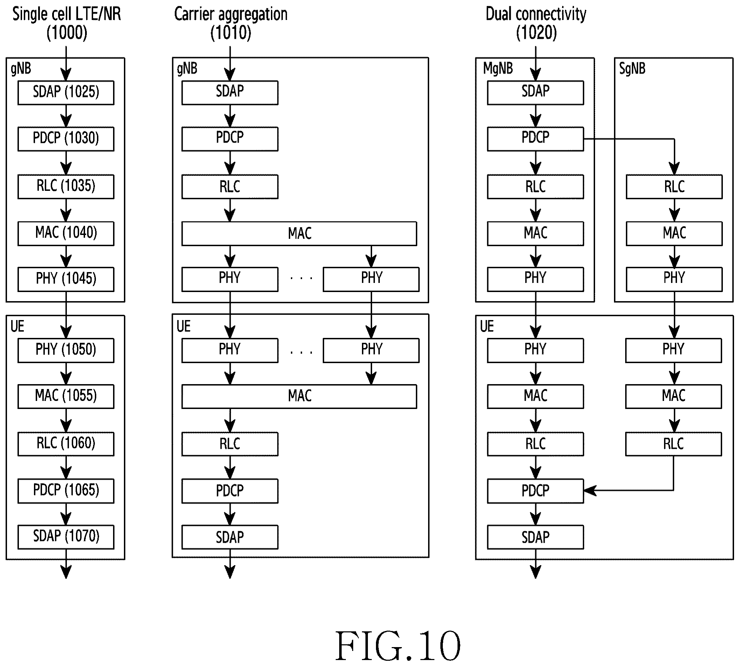

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) 1025 or 1070, an NR packet data convergence protocol (PDCP) 1030 or 1065, an NR radio link control (RLC) 1035 or 1060, and an NR medium access controls (MAC) 1040 or 1055, on each of UE and NR base station sides.

The main functions of the NR SDAP 1025 or 1070 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1030 or 1065 may include some of the following functions: below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 1035 or 1060 may include some of the following functions: below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1040 or 1055 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1045 or 1050 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 400. Contrarily, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as 410. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

Referring to the above description relating to the PDCCH and beam configuration, PDCCH repetitive transmission is not supported in current Rel-15 and Rel-16 NR, and it may be thus difficult to achieve required reliability in a scenario requiring high reliability, such as URLLC. The disclosure may improve the PDCCH reception reliability of a UE by providing a PDCCH repetitive transmission method through multiple transmission points (TRPs). Specific methods thereof will be described hereinafter through the embodiments below.

Hereinafter, embodiments of the disclosure will be described in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, a gNB), an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, 5G systems will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI

Scheduling DCI (for example, DCI used for the purpose of scheduling downlink or uplink data)

- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

[Type-1 HARQ-ACK codebook-related]

A method for configuring a Type-1 HARQ-ACK codebook in an NR system is described. The Type-1 HARQ-ACK codebook may also be referred to as a semi-static HARQ-ACK codebook.

In the following description, only one PUCCH is available for a UE to transmit HARQ-ACK information within one time unit (e.g., a slot, a sub-slot, or a mini-slot). The time unit is described as a slot unless specified otherwise, but may be extended to a sub-slot, a mini-slot, or the like.

The UE may receive a semi-static HARQ-ACK codebook configuration from a base station. The configuration may be configured via an upper-layer signal (e.g., an RRC signal). The UE may receive a DCI format from the base station. The UE may transmit HARQ-ACK information of a PDSCH or SPS PDSCH release or Scell dormancy indication scheduled by the DCI format in a slot indicated by a value of a PDSCH-to-HARQ _feedback timing indicator field in the DCI format. When the UE is instructed to transmit a plurality of pieces of HARQ-ACK information in one slot, the UE may generate the pieces of HARQ-ACK information into a HARQ-ACK codebook according to a predetermined rule, and may transmit the same via one PUCCH in the slot.

A specific rule for generating a semi-static HARQ-ACK codebook is as follows.

The UE reports a HARQ-ACK information bit value of NACK in a HARQ-ACK codebook in a slot not indicated by a PDSCH-to-HARQ_feedback timing indicator field in a DCI format.

When the UE reports only HARQ-ACK information on one SPS PDSCH release or one PDSCH reception in all $M_{A,C}$ cases for candidate PDSCH reception and the report is scheduled by DCI format 1_0 including information in which a counter DACI field indicates 1 in a Pcell, the UE determines one HARQ-ACK codebook for the SPS PDSCH release or the PDSCH reception.

Other cases follow a HARQ-ACK codebook determination method according to the following method.

In the disclosure, for convenience, a PDSCH-to-HARQ_feedback timing indicator value is referred to as a K1 value. The UE may have a plurality of K1 values configured, and the plurality of K1 values is collectively referred to as a K1 set.

A set of PDSCH reception candidate occasions in serving cell c is referred to as $M_{A,c}$, and a method for obtaining or calculating $M_{A,c}$ is described below.

First, it is assumed that a PDSCH scheduled by a DCI format is received in a single slot, which may include a case in which pdsch-AggregationFactor is not configured by an upper layer.

When transmitting a PUCCH or PUSCH for delivering a Type-1 HARQ-ACK codebook in slot n, a pseudo-code therefor is as follows.

[Pseudo-code 1: (No repeated PDSCH reception)]

- Preparation operation: Set R is a set of pieces of scheduling information (e.g., slot information (hereinafter, a K0 value) to which a PDSCH is mapped, and start symbol and length information (e.g., hereinafter, a starting and length value (SLIV)) configured in a time domain resource assignment (TDRA) table. When the UE monitors one or more DCI formats and the DCI formats use different TDRA tables, the set R is generated based on all the TDRA tables.

- Operation 0: $M_{A,c}$ is initialized to an empty set. k is initialized to 0. j is initialized to 0.

  - Operation 1: A k-th largest K1 value is selected from a configured K1 set. (For example, when k = 0, a largest K1 value is selected from the K1 set, and when k = 1, a second largest K1 value is selected from the K1 set.) The K1 value is referred to as $K_{1,k}$.

- Operation 2: When a symbol corresponding to start symbol and length information (SLIV) belonging to each row of set R overlaps with a symbol configured for an uplink in an upper layer in a slot (slot n-$K_{1,k}$) corresponding to the $K_{1,k}$ value, the row may be excluded from set R.
- Operation 3-1 (when the UE has only a UE capability to receive at most one unicast PDSCH in a single slot): When determined set R is not an empty set, j is added to set $M_{A,c}$ as a new PDSCH reception candidate occasion. When receiving one of PDSCH candidates in set R, the UE may position a HARQ-ACK of the one PDSCH in the new PDSCH candidate occasion j. j is increased by 1.

  - Operation 3-2 (when the UE has a UE capability to receive more than one unicast PDSCH in a single slot): For SLIV that ends first in determined set R and SLIVs that temporally overlap with the SLIV, j is added to set $M_{A,c}$ as a new PDSCH reception candidate occasion. When receiving one of PDSCH candidates having the SLIV, the UE may position a HARQ-ACK of the one PDSCH in the new PDSCH candidate occasion j. j is increased by 1. The SLIVs are excluded from set R. Operation 3-2 is repeated until set R is an empty set.

- Operation 4: k is increased by 1. When k is smaller than the cardinality of the K1 set, pseudo-code 1 is restarted from operation 2, and when k is equal to or greater than the cardinality of the K1 set, pseudo-code 1 is terminated.

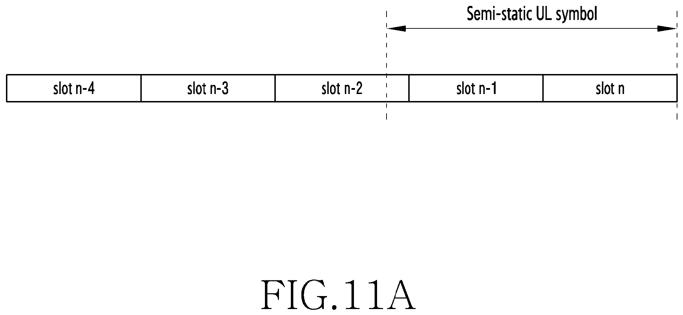

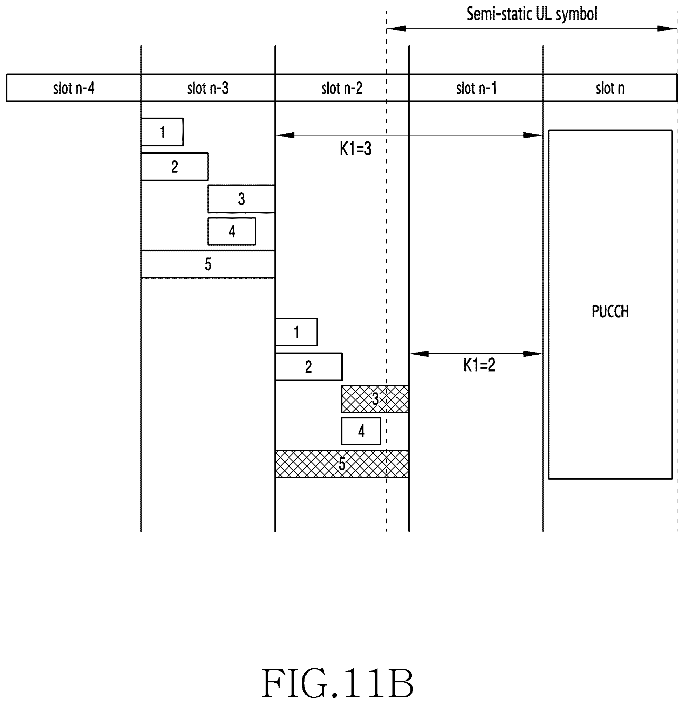

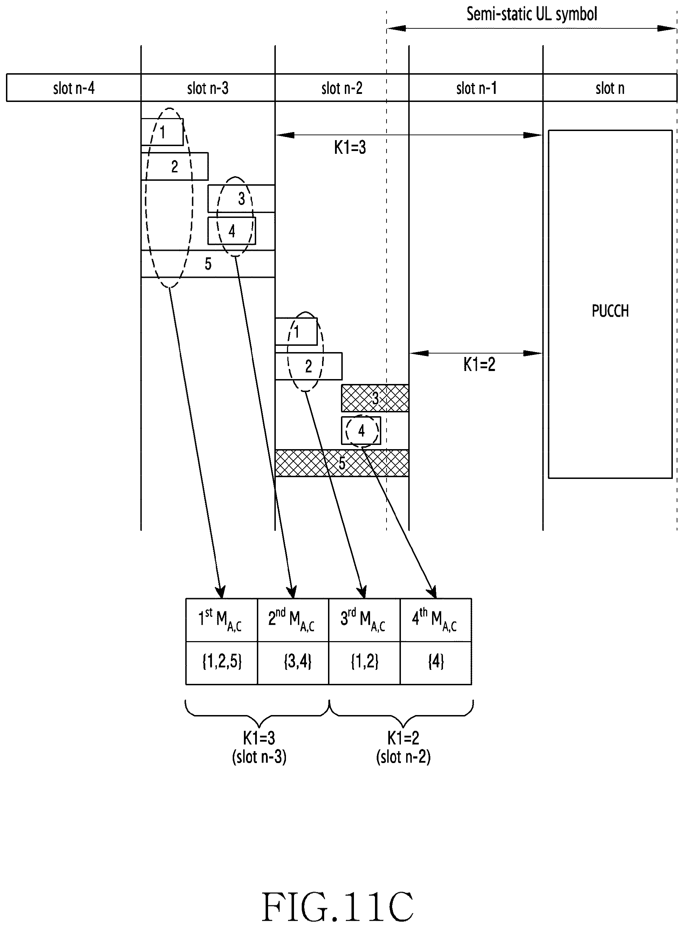

FIG. 11A, FIG. 11B, and FIG. 11C illustrate a Type-1 HARQ-ACK codebook for transmission of a HARQ-ACK of a PDSCH according to an embodiment of the disclosure.

Referring to FIG. 11A, FIG. 11B, and FIG. 11C, a UE may perform PUCCH transmission including HARQ-ACK information in slot n. The HARQ-ACK information may be generated in the form of a Type-1 HARQ-ACK codebook.

The UE may receive uplink/downlink configuration information from a base station. According to the uplink/-downlink configuration information, the UE may determine whether a symbol is an uplink symbol, a downlink symbol, or a flexible symbol. For convenience, only an uplink symbol is described herein, and a symbol other than the uplink symbol may be a downlink symbol or a flexible symbol. Referring to FIG. 11A, all symbols of slot n and slot n-1 may be configured as uplink symbols. Last two symbols of slot n-2 may be configured as uplink symbols.

It is assumed that K1 = 2 and K1 = 3 are configured as K1 values for the UE. That is, a K1 set is {2, 3}. A TDRA table of a DCI format monitored by the UE may include five rows as below in Table 24. For reference, a K0 value, an SLIV, and a PDSCH mapping type value may be configured in each row, but the PDSCH mapping type is omitted for convenience of description.

[Table 24]

| Index | K0 | SLIV (S,L) |
|---|---|---|
| 1 | 0 | SLIV 1 (0,4) |
| 2 | 0 | SLIV 2 (0,7) |
| 3 | 0 | SLIV 3 (7,7) |
| 4 | 0 | SLIV 4 (7,4) |
| 5 | 0 | SLIV 5 (0,14) |

The UE may include each SLIV row of the TDRA table in Table 24 in set R according to a preparation operation. Table 24 shows SLIVs according to each row. The UE may determine a PDSCH reception candidate opportunity $M_{A,c}$, based on the K1 values and set R. Referring to FIG. 11A, FIG. 11B, and FIG. 11C, pseudo code 1 may be interpreted as follows. In the following description, it is assumed that the UE has a UE capability to receive more than one unicast PDSCH in a single slot.

- Operation 0: $M_{A,c}$ is initialized to an empty set, k is initialized to 0. j is initialized to 0.
- Operation 1: A (k=0)th largest K1 value is selected from the configured K1 set. The K1 value is $K_{1,0}$ = 3.
- Operation 2: When a symbol corresponding to start symbol and length information (SLIV) belonging to each SLIV row of set R overlaps a symbol configured for an uplink in an upper layer in slot n-$k_{1,0}$ = n-3, the SLIV row may be excluded from set R. Referring to FIG. 11B, when some symbols in slot n-3 are semi-static uplink (UL) symbols configured by the upper layer, an SLIV row including SLIVs overlapping with the symbols may be excluded from set R. Referring to FIG. 11B, since no semi-static uplink symbol is configured in slot n-3, all SLIV rows may not be excluded from set R. Set R may include {1, 2, 3, 4, 5}.

- Operation 3-2 (when the UE has a UE capability to receive more than one unicast PDSCH in a single slot)

   * For SLIV that ends first in determined set R and SLIVs that temporally overlap with the SLIV, j = 0 is added to set $M_{A,c}$ as a new PDSCH reception candidate occasion. Here, the SLIV that ends first is SLIV1 (0, 4) in row 1, and the SLIVs overlapping with the SLIV are SLIV2 (0, 7) in row 2 and SLIV5 (0, 14) in row 5. Therefore, j = 0 is added to $M_{A,c}$, and when the UE receives a PDSCH scheduled by SLIV1(0, 4) in row 1, SLIV2(0, 7) in row 2, or SLIV5(0, 14) in row 5 in slot n-3, the UE may include a HARQ-ACK of the PDSCH in a position corresponding to a first (j = 0) $M_{A,c}$ in the Type-1 HARQ-ACK codebook, j is increased by 1 to j = 1. The SLIV rows of rows 1, 2, and 5 are excluded from set R, and accordingly R = {3, 4}. Since set R is not an empty set, operation 3-2 is repeated.
   * For SLIV which ends first in determined set R and SLIV that temporally overlaps with the SLIV, j = 1 is added to set $M_{A,c}$ as a new PDSCH reception candidate occasion. Here, the SLIV that ends first is SLIV4 (7, 4) in row 4, and the SLIV overlapping with the SLIV is SLIV3 (7, 7) in row 3. Therefore, when j = 1 is added to $M_{A,c}$, and when the UE receives a PDSCH scheduled by SLIV4 (7, 4) in row 4 or SLIV3 (7, 7) in row 3 in slot n-3, the UE may include a HARQ-ACK of the PDSCH in a position corresponding to a second (j = 1)$M_{A,c}$ in the Type-1 HARQ-ACK codebook. j is increased by 1 to j = 2. The SLIVs of row 3 and row 4 is excluded from set R, and thus R becomes an empty set. Therefore, operation 3-2 may be terminated.

- Operation 4: k is increased by 1 to k = 1. Since k = 1 and the cardinality of the K1 set is 2, the process is restarted from operation 2 by using the following K1 value. Now, $K_{1,1}$ = 2.
- Operation 2: When a symbol corresponding to start symbol and length information (SLIV) belonging to each SLIV row of set R overlaps a symbol configured for an uplink in an upper layer in slot $n-k_{1,1}$ = n-2, the row may be excluded from set R. Referring to FIG. 11B, when some symbols in slot n-2 are semi-static uplink (UL) symbols configured by the upper layer, a row including SLIVs overlapping with the symbols may be excluded from set R. Referring to FIG. 11B, a semi-static uplink symbol is configured in slot n-2, and row 3 and row 5 overlap with the semi-static uplink symbol. Therefore, SLIV row 3 and SLIV row 5 may be excluded from set R. Set R may include {1, 2, 4}.
- Operation 3-2 (when the UE has a UE capability to receive more than one unicast PDSCH in a single slot)

   * For SLIV that ends first in determined set R and SLIV that temporally overlaps with the SLIV, j = 2 is added to set $M_{A,c}$ as a new PDSCH reception candidate occasion. Here, the SLIV that ends first is SLIV1 (0, 4) in row 1, and the SLIV overlapping with the SLIV is SLIV2 (0, 7) in row 2. Therefore, j = 2 is added to $M_{A,c}$, and when the UE receives a PDSCH scheduled by SLIV1(0, 4) in row 1 or SLIV2(0, 7) in row 2 in slot n-3, the UE may include a HARQ-ACK of the PDSCH in a position corresponding to a third (j = 2) $M_{A,c}$ in the Type-1 HARQ-ACK codebook. j is increased by 1 to j = 3. The SLIVs of rows 1 and 2 are excluded from set R, and accordingly R = {4}. Since set R is not an empty set, operation 3-2 is repeated.
   * For SLIV which ends first in determined set R and SLIV that temporally overlaps with the SLIV, j = 3 is added to set $M_{A,c}$ as a new PDSCH reception candidate occasion. Here, the SLIV that ends first is SLIV4 (7, 4) in row 4, and there is no SLIV overlapping with the SLIV. Therefore, when j = 3 is added to $M_{A,c}$, and when the UE receives a PDSCH scheduled by SLIV4 (7, 4) in row 4 in slot n-3, the UE may include a HARQ-ACK of the PDSCH in a position corresponding to a fourth (j = 3)$M_{A,c}$ in the Type-1 HARQ-ACK codebook. j is increased by 1 to j = 4. The SLIV of row 4 is excluded from set R, and thus R becomes an empty set. Therefore, operation 3-2 may be terminated.

- Operation 4: k is increased by 1 to k = 2. Since k = 1 and the cardinality of the K1 set is, the pseudo-code is terminated.

Referring to FIG. 11C, the UE may determine $M_{A,c}$ corresponding to four PDSCH reception candidate occasions j = 0, j = 1, j = 2, and j = 3. Here, $M_{A,C}$ corresponding to j = 0 and $M_{A,C}$ corresponding to j = 1 are PDSCH reception candidate occasions in slot n-3, and $M_{A,C}$ corresponding to j = 2 and $M_{A,C}$ corresponding to j = 3 are PDSCH reception candidate occasions in slot n-2. The size of a Type-1 HARQ-ACK codebook may be determined according to the number of PDSCH reception candidate occasions. The number of actual bits per PDSCH reception candidate may be determined according to a configuration, such as the number of transport blocks (TBs) included in each PDSCH, the number of code block groups (CBGs) included in each PDSCH, and spatial bundling.

[First embodiment: PDSCH processing according to UE capability]

According to an embodiment of the disclosure, a UE may design a HARQ-ACK codebook according to a UE capability.

The UE capability may refer to a set of functions available according to the implementation of the UE by a UE manufacturer. The UE may report the UE capability to a base station when connecting to a cell, which may be referred to as a UE capability report. The base station may obtain the UE capability of the UE (RRC-connected UE) connecting to the cell thereof through the UE capability report from the UE.

According to the disclosure, the UE may transmit one of the following UE capabilities to the base station through a UE capability report.

The UE may report the maximum number of PDSCHs that the UE is able to process in a single slot as a UE capability. Here, "processing" may refer to a series of processes of receiving a PDSCH and generating a HARQ-ACK indicating whether the PDSCH has been successfully received.

For example, the UE may report a UE capability to process up to N PDSCHs in one slot to the base station through a UE capability report, and when the base station schedules more than N PDSCHs for the UE in one slot, the UE is unable to receive more than N PDSCHs in one slot. That is, it is preferable that the base station schedule a maximum of N PDSCHs for the UE in one slot, and it is preferable that the base station do not schedule more than N PDSCHs in one slot.

Here, scheduled PDSCHs may not overlap in the time domain. That is, when N PDSCHs are scheduled in one slot, the N PDSCHs may not overlap each other in the time domain, and may be positioned in different symbols.

N may have at least one value of 1, 2, 4, and 7.

In the disclosure, the UE capability includes the maximum number of PDSCHs that the UE is able to process in one slot. However, the UE capability may include the maximum number of PDSCHs that the UE is able to process in a specific time period (mini-slot, a plurality of slots, or the like) rather than in one slot. In this case, a slot in an embodiment of the disclosure may be interpreted as being replaced by a specific time period.

According to an embodiment of the disclosure, when the base station schedules more than N PDSCHs, for example, M (M > N) PDSCHs, for the UE in one slot, the UE may perform at least one of the following operations.

According to a first method, the UE may select N PDSCHs from the M PDSCHs, and may receive the N PDSCHs.

The UE may select the N PDSCHs from the M PDSCHs according to a chronological order. More specifically, the UE may select the N PDSCHs scheduled in a first symbol from the M PDSCHs in the chronological order. The UE may determine the indexes of the symbols in which the PDSCHs are scheduled in a slot. The UE may determine the indexes of a first symbol to a last symbol in which the PDSCHs are scheduled. The UE may select the N PDSCHs having a lowest index (the first symbol in time) among the indexes of the M PDSCHs, and may process the N PDSCHs.

The N PDSCHs may be selected according to the chronological order of DCIs corresponding to the M PDSCHs. More specifically, the N PDSCHs corresponding to DCIs positioned later in time among the DCIs corresponding to the M PDSCHs may be selected. The UE may determine the index of a slot in which DCI (DCI corresponding to a PDSCH) scheduling a PDSCH is positioned or the index of a symbol in the slot. The DCI may be received through a PDCCH, and the UE may determine the index of a slot in which the PDCCH is received and the index of a symbol in which the PDCCH is received in the slot (a first symbol of the PDCCH or a last symbol of the PDCCH when the PDCCH corresponds to a plurality of symbols). The UE may determine the N DCIs positioned latest in time among the DCIs corresponding to the M PDSCHs, because in a case where the base station schedules the UE later via DCI, information included in a PDSCH scheduled later may be more important.

When the UE selects the N PDSCHs to process, the UE may preferentially include PDSCHs scheduled by downlink control information (DCI) among the M PDSCHs. A PDSCH may be scheduled by two methods. In a first method, a PDSCH may be scheduled by DCI. The UE may receive a PDCCH, and the PDCCH may include DCI. The DCI may include scheduling information on a PDSCH. For reference, the DCI including the scheduling information on the PDSCH may be one of DCI format 1_0, DCI format 1_1, DCI format 1_2, and DCI format 1_3. In a second method, a PDSCH may be periodically scheduled through an upper-layer signal. The PDSCH scheduled by this method may be referred to as an SPS PDSCH. Unlike the PDSCH scheduled by the DCI, the SPS PDSCH may not have corresponding DCI. Therefore, the base station is unable to dynamically control scheduling information on the SPS PDSCH for the UE. Accordingly, the PDSCH scheduled by the DCI that is dynamically controllable through the DCI may be prioritized.

When the UE selects the N PDSCHs to process, the UE may preferentially include PDSCHs scheduled by an upper-layer signal among the M PDSCHs. A PDSCH may be scheduled by two methods. An SPS PDSCH may include information to be periodically transmitted. The information may be information essential for an upper layer (application layer or the like). That is, the base station may transmit important information through the SPS PDSCH. Therefore, the SPS PDSCH may be prioritized.

When the UE selects the N PDSCHs to process, the UE may preferentially include PDSCHs having a high priority among the M PDSCHs. The UE may determine the priority of each PDSCH. This priority may be dynamically indicated in DCI that schedules the PDSCH or configured in an upper-layer signal. The priority may include "0" and "1", in which "0" may correspond to a PDSCH having a low priority, and "1" may correspond to a PDSCH having a high priority. The UE may preferentially select PDSCHs having a high priority (i.e., PDSCHs corresponding to a priority of "1") among the M PDSCHs, because the PDSCHs having a higher priority may transmit more important information.

When the UE selects the N PDSCHs to process, the UE may select the N PDSCHs, based on an RNTI with which DCI corresponding to the M PDSCHs is scrambled. That is, the UE may preferentially include PDSCHs corresponding to DCI scrambled with a specific RNTI. For example, DCI corresponding to a PDSCH may be scrambled with a C-RNTI, a CS-RNTI, or an MCS-C-RNTI. An MCS-C-RNTI is an RNTI used to transmit a PDSCH with higher reliability, and a CS-RNTI may be used to activate or retransmit an SPS PDSCH. The UE may prioritize DCI scrambled with an MCS-C-RNTI. That is, the UE may preferentially select PDSCHs corresponding to DCI scrambled with an MCS-C-RNTI. In addition, the UE may prioritize DCI scrambled with a C-RNTI. That is, the UE may preferentially select PDSCHs corresponding to DCI scrambled with a C-RNTI. A system information block may be transmitted through a PDSCH scheduled by DCI scrambled with an SI-RNTI. When there is DCI scrambled with an SI-RNTI, the UE may include a PDSCH scheduled by the DCI as a top priority in the N PDSCHs. That is, the UE may necessarily receive a PDSCH including a system information block.

When the UE selects the N PDSCHs to process, the UE may preferentially select a PDSCH having a low index corresponding to the PDSCH among the M PDSCHs. In a case of an SPS PDSCH, a unique index may be allocated to the SPS PDSCH. For example, an upper-layer signal for configuring an SPS PDSCH may include a unique index for the SPS PDSCH. Different SPS PDSCHs in one slot may correspond to different unique indexes. That is, the UE may preferentially select SPS PDSCHs with a low index, because the base station may transmit more important information in an SPS PDSCH having a low index among pieces of information transmitted through SPS PDSCHs, and thus reception of the SPS PDSCH may be prioritized.

When the UE selects the N PDSCHs to process, the UE may preferentially select a PDSCH transmitted for a broadcast or multicast purpose among the M PDSCHs. The UE may determine that a PDSCH is transmitted for one of unicast, broadcast, and multicast purposes, which may be based on an RNTI with which a DCI format in which the PDSCH is scheduled is scrambled or an upper-layer configuration of the PDSCH. The UE may receive a PDSCH transmitted for a unicast purpose through retransmission, but retransmission of PDSCH transmitted for a broadcast or multicast purpose may be difficult. Therefore, the UE may preferentially receive a PDSCH transmitted for a broadcast or multicast purpose, thereby avoiding retransmission of a PDSCH transmitted for a unnecessary broadcast or multicast purpose.

The UE may select the N PDSCHs according to implementation based on an embodiment. Here, "selecting according to implementation" means that a method for selecting N PDSCHs is implemented according to convenience of the UE manufacturer instead of defining a selection method. This implementation method may be determined by one or a combination of the methods described above.

In the method, valid HARQ-ACK information on the N PDSCHs selected by the UE may be transmitted to the base station. Further, valid HARQ-ACK information on M-N PDSCHs that are not selected may not be transmitted to the base station. That is, the UE may transmit a NACK of the M-N PDSCHs to the base station, or may not transmit HARQ-ACK information on the M-N PDSCHs. Even though the UE transmits an ACK of the M-N PDSCHs to the base station, the base station may determine that the HARQ-ACK information on the PDSCHs is not valid. The base station determining that the HARQ-ACK information is not valid may be the same as determining the NACK.

According to a second method, when more than N PDSCHs are scheduled in one slot for the UE, the UE may not process PDSCHs other than a specific PDSCH in the slot. Here, the number of specific PDSCHs is not necessarily N, and may be equal to or less than N. That is, the UE may receive only PDSCHs that the UE essentially needs to receive. The specific PDSCH may be as follows.

The UE may receive PDSCHs having a high priority among PDSCHs scheduled in one slot. The UE may not receive PDSCHs having a low priority among the PDSCHs scheduled in the one slot, which may be performed when the number of the PDSCHs having the high priority is less than or equal to the maximum number of PDSCHs that the UE is able to process in one slot. This operation considers only receiving the PDSCHs having the high priority, based only on priority, and the UE may exclude some or all of the PDSCHs having the low priority.

The UE may receive a PDSCH (PDSCH including a system information block) scheduled by DCI scrambled with an SI-RNTI among PDSCHs scheduled in one slot. The UE may not receive PDSCHs scheduled by DCI scrambled with other RNTIs. That is, the UE may receive only a PDSCH for transmitting most important information.

The UE may receive only PDSCHs scheduled by DCI among PDSCHs scheduled in one slot. The UE may not receive SPS PDSCHs among the PDSCHs scheduled in the one slot, which may be performed when the number of PDSCHs scheduled by DCI is less than or equal to the maximum number of PDSCHs that the UE is able to process in one slot. This operation may be applied assuming that information transmitted through an SPS PDSCH has a lower priority than information included in a PDSCH scheduled by DCI.

The UE may receive only SPS PDSCHs among PDSCHs scheduled in one slot. The UE may not receive PDSCHs scheduled by DCI among the PDSCHs scheduled in the one slot, which may be performed when the number of SPS PDSCHs is less than or equal to the maximum number of PDSCHs that the UE is able to process in one slot. This operation may be applied assuming that information transmitted by a PDSCH scheduled by the DCI has a lower priority

EP 4 730 683 A1

than information included in an SPS PDSCH.

According to a third method, when more than N PDSCHs are scheduled in one slot for the UE, the UE may not process all PDSCHs in the slot. That is, when more than N PDSCHs are scheduled in one slot, the UE may not receive all PDSCHs scheduled in the slot. In addition, the UE may transmit a NACK as HARQ-ACK information on the PDSCHs to the base station.

This method may allow the UE to ignore scheduling of the base station that exceeds the UE capability when the base station requires the UE to process a number of PDSCHs exceeding the UE capability in one slot, and may be advantageous for UE implementation. The UE needs a process of selecting N PSCHs to be processed in one slot in the first and second methods, whereas the UE does not process all scheduled PDSCHs in the third method, thus reducing complexity in UE implementation.

In the methods described above, the UE selects a PDSCH according to a UE capability. Here, it is assumed that the UE has a UE capability to process up to N PDSCHs in one slot. Even though the UE is able to process up to N PDSCHs, the base station may configure the UE to process a smaller number of PDSCHs than N in one slot. The base station may configure this operation to reduce the UE's power consumption. The base station may configure this operation according to implementation of a base station scheduler. That is, the base station may configure the UE to process up to K (< N) PDSCHs in one slot. Here, K may be a value configured for the UE through an upper-layer signal. For example, when the UE transmits a UE capability to process up to N = 7 PDSCHs in one slot to the base station, the base station may configure K = 4 for the UE. In this case, the operation of the UE may be changed to receiving up to K PDSCHs in one slot. The UE may apply the foregoing methods by replacing N with K.

[Second embodiment: Design of HARQ-ACK codebook according to UE capability]

The disclosure illustrates a method of designing a HARQ-ACK codebook based on a UE capability.

For descriptive convenience, it is assumed that a UE is able to process up to N PDSCHs in one slot according to a UE capability. For reference, the UE is able to process up to N PDSCHs in one slot, but a base station may configure the maximum number of PDSCHs to process in one slot for the UE. When the UE receives the foregoing configuration, N is the maximum number of PDSCHs to process in one slot that is configured by the base station for the UE in the following description of the disclosure. When the UE does not receive the foregoing configuration, N is the maximum number of PDSCHs to process in one slot that is determined according to the UE capability.

To design a HARQ-ACK codebook based on a UE capability, the UE may receive the following information configured by the base station. The following information may be configured through an upper-layer signal (RRC signal) of the base station.

As first information, the UE may receive K1 values configured by the base station. A K1 value is a value indicating an offset between a PDSCH reception slot and a slot in which a HARQ-ACK is transmitted. The UE may receive one K1 value or a plurality of K1 values configured by the base station. The K1 values may be collectively referred to as a K1 set.

As second information, the UE may receive a configuration of the maximum number of PDSCHs to process in one slot. As described above, when the configuration is absent, the UE may use the maximum number of PDSCHs to process in a slot that is determined according to the UE capability.

The UE may have a plurality of UE capabilities. For example, the maximum number of PDSCHs that the UE is able to process in one slot may vary according to PRB allocation. For example, the UE may process up to N1 PDSCHs having 136 or fewer PRBs, and may process up to N2 PDSCHs having more than 136 PRBs. When having a plurality of such UE capabilities, the UE may determine the maximum number of PDSCHs to process in one slot, based on a greater UE capability (i.e., a greater value of N1 and N2) or a smaller UE capability (i.e., a smaller value of N1 and N2).

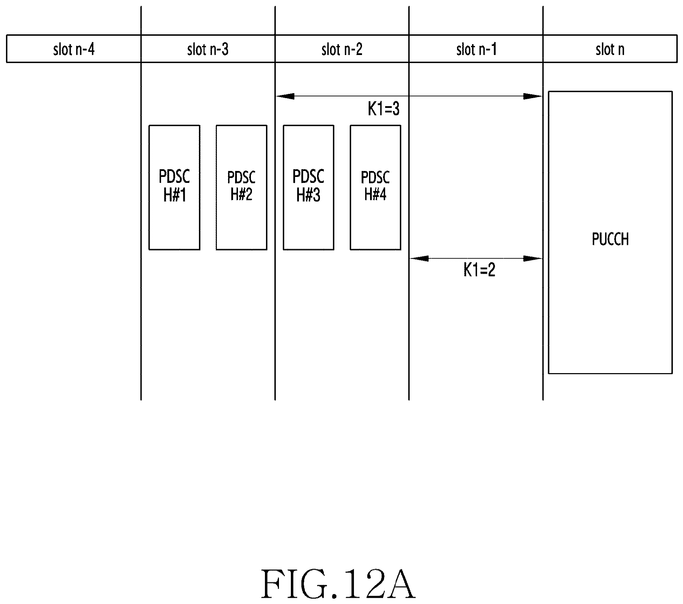

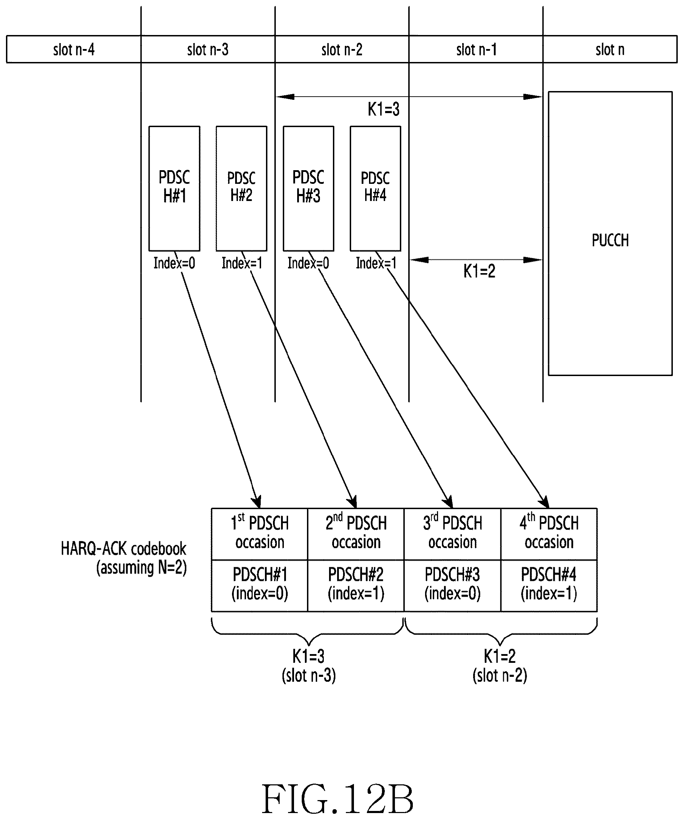

FIG. 12A and FIG. 12B illustrate generation of a HARQ-ACK codebook according to a UE capability according to an embodiment of the disclosure.

Referring to FIG. 12A, a UE may transmit a PUCCH in slot n. The PUCCH may include a HARQ-ACK codebook. The HARQ-ACK codebook may include one HARQ-ACK bit or a plurality of HARQ-ACK bits, and each HARQ-ACK bit may have a corresponding slot and a corresponding PDSCH occasion. That is, when the UE receives a PDSCH, the UE may determine the HARQ-ACK bit position of the PDSCH in the HARQ-ACK codebook, based on the slot of the PDSCH and the PDSCH occasion.

For convenience, a HARQ-ACK bit corresponding to one PDSCH is assumed to be 1 bit in the disclosure. However, when a PDSCH includes up to two transport blocks (TBs), a HARQ-ACK bit corresponding to the PDSCH may be 2 bits, and when a PDSCH includes up to X codeblock groups (CBGs), a HARQ-ACK bits corresponding to the PDSCH may be X bits.

When the UE transmits the PUCCH in slot n, the HARQ-ACK codebook of the PUCCH may include a HARQ-ACK bit(s) corresponding to PDSCHs received in slot n-k1. Here, k1 may be one of K1 values configured as first information. For example, it is assumed that there are four K1 values (k1_0, k1_1, k1_2, and k1_3) configured as the first information. In this case, the HARQ-ACK codebook of the PUCCH may include a HARQ-ACK bit(s) corresponding to PDSCHs received in slot

42

n-k1_0, slot n-k1_1, slot n-k1_2, and slot n-k1_3.

Referring to FIG. 12A, it may be assumed that k1_0 = 3 and k1_1 = 2 are configured as K1 values for the UE. Therefore, slot n-k1_0 = n-3 and slot n-k1_1 = n-2 are slots that need to be included in the HARQ-ACK codebook to be transmitted in slot n. "Slots to be included in a HARQ-ACK codebook" may mean that HARQ-ACK information of a PDSCH received in a slot needs to be included in the HARQ-ACK codebook.

For reference, a PDSCH may be repeatedly transmitted over a plurality of slots. In this case, an embodiment of the disclosure may be applied based on a PDSCH transmitted last.

Referring to FIG. 12A, the maximum number of PDSCHs that the UE is able to receive in one slot (second information) may be N = 2. In this case, the UE may receive scheduling of N = 2 PDSCHs in one slot. For example, the UE may receive scheduling of PDSCH#1 and PDSCH#2 in slot n-3, and may receive scheduling of PDSCH#3 and PDSCH#4 in slot n-2. This example is for illustration, and the UE may receive scheduling of only one PDSCH in each slot, or may not receive scheduling of any PDSCH. In addition, when the UE receives scheduling of N = 2 or more PDSCHs in one slot, the UE may determine N PDSCHs to receive by using the first embodiment.

There may be N PDSCH occasions in each slot. N is the maximum number of PDSCHs to process in one slot that is determined according to second information. That is, up to N PDSCHs may be scheduled in each slot. Therefore, each slot may include N HARQ-ACK bits corresponding to the N PDSCHs of each slot. For example, slot n-k1_0 may include N HARQ-ACK bits, which are assumed as $b^0_0$, $b^0_1$, ..., $b^0_{N-1}$. Slot n-k1_1 may include N HARQ-ACK bits, which are assumed as $b^1_0$, $b1^1_1$, ..., $b^1_{N-1}$. Slot n-k1_2 may include N HARQ-ACK bits, which are assumed as $b^2_0$, $b^2_1$, ..., $b^2_{N-1}$. Slot n-k1_3 may include N HARQ-ACK bits, which are assumed as $b^3_0$, $b^3_1$, ..., $b^3_{N-1}$. Therefore, the HARQ-ACK codebook included in the PUCCH of slot n is [$b^0_0$, $b^0_1$, ..., $b^0_{N-1}$, $b^1_0$, $b1^1_1$, ..., $b^1_{N-1}$, $b^2_0$, $b^2_1$, ..., $b^2_{N-1}$, $b^3_0$, $b^3_1$, ..., $b^3_{N-1}$]. The size (payload size) of the HARQ-ACK codebook may be equal to the product of the total number of K1 values included in the K1 set and the maximum number (N) of PDSCHs to process in one slot.

For reference, this is for one cell. When a plurality of cells is configured for the UE, the UE may generate a HARQ-ACK codebook for each cell and combine the codebooks in the ascending order of cell indexes to generate a single HARQ-ACK codebook. For reference, when the plurality of cells is configured, different K1 values may be configured for the respective cells, and different N values may be configured for the respective cells.

For reference, the base station may configure the maximum number of PDSCHs to process in one cell for the UE with respect to the plurality of cells. For example, the number of cells configured for the UE may be A, and the maximum number of PDSCHs to process in one slot of the A cells may be configured to N. In this case, the UE may generate N PDSCH occasions in one slot of the A cells. The UE may receive a PDSCH in one slot of one of the A cells. The received PDSCH may correspond to one of the N PDSCH occasions. Here, each of the N PDSCH occasion may have no constraint on a cell to which the PDSCH occasion belongs (corresponds). That is, the PDSCH occasion may correspond to a PDSCH received in a first cell or a PDSCH received in a second cell.

For reference, the base station may configure the maximum number of PDSCHs to process in one slot for the UE with respect to a plurality of cell sets. That is, the first maximum number of PDSCHs may be configured for a first cell set, and the second maximum number of PDSCHs may be configured for a second cell set. In this case, the UE may generate a first HARQ-ACK codebook for cells included in the first cell set, based on the first maximum number of PDSCHs, may generate a second HARQ-ACK codebook for cells included in the second cell set, based on the second maximum PDSCH number, and may combine the first HARQ-ACK codebook and the second HARQ-ACK codebook to generate a HARQ-ACK codebook.

Referring to FIG. 12B, since the number of PDSCHs to process in one slot is 2 (N=2), the UE may generate two PDSCH occasions for each slot corresponding to the K1 value. Since the K1 value is 3 and 2, the UE may generate a first PDSCH occasion and a second PDSCH occasion for slot n-3, and may generate a third PDSCH occasion and a fourth PDSCH occasion for slot n-2. In addition, each PDSCH occasion may have a corresponding HARQ-ACK bit. Therefore, there may be four HARQ-ACK bits [$b^0_0$, $b^0_1$, $b^1_0$, $b^1_1$] respectively corresponding to the four PDSCH occasions. Here, $b^0_0$ and $b^0_1$ are HARQ-ACK bits for the first PDSCH occasion and the second PDSCH occasion for slot n-3, and $b^1_0$ and $b^1_1$ are HARQ-ACK bits for the third PDSCH occasion and the fourth PDSCH occasion for slot n-2.

The UE needs to determine which of N PDSCH occasions a PDSCH received in a slot corresponds to. For example, when the UE receives a PDSCH in slot n-k1_0, the UE needs to determine which of the N PDSCH occasions (and N HARQ-ACK bits {$b^0_0$, $b^0_1$, $b^0_2$, $b^0_3$} corresponding to the N PDSCH occasions) of the slot the PDSCH received in the slot corresponds to. The UE may determine a PDSCH occasion corresponding to a received PDSCH by at least one of the following methods.

The UE may indicate the index of a PDSCH occasion corresponding to a scheduled PDSCH in DCI scheduling the PDSCH. More specifically, the DCI scheduling the PDSCH may include a field indicating the index of the PDSCH occasion. The length of the field may be determined to be ceiling(log2(N)) bits. The UE may obtain the index of the PDSCH occasion corresponding to the scheduled PDSCH from the field of the DCI scheduling the PDSCH. For example, when N = 4, the length of the field may be determined to be 2 bits. When the 2 bits are 00, the index of the corresponding PDSCH occasion is 0; when the 2 bits are 01, the index of the corresponding PDSCH occasion is 1; when the 2 bits are 10, the index of the corresponding PDSCH occasion is 2; and when the 2 bits are 11, the index of the corresponding PDSCH occasion is 3. For reference, when N = 1, the DCI may not include the field (i.e., the length of the field is 0 bits). In this case, the index of the PDSCH occasion corresponding to the scheduled PDSCH may be 0.

The field may not be included in the DCI scheduling the PDSCH. For example, in DCI format 1_1, 1_2, or 1_3, the field may be included in the DCI, but in DCI format 1_0, the field may not be included. (For reference, when the UE monitors DCI format 1_0 in a common search space, the DCI format 1_0 may not include the field, and when the UE monitors DCI format 1_0 in a UE-specific search space, the DCI format 1_0 may not include the field.) In addition, to reduce overhead of DCI, the base station may not configure the field, which may be configured separately for each DCI format. Therefore, the field may not be included in one DCI format or a plurality of DCI formats among DCI formats 1_1, 1_2, and 1_3. In this case, the index of the PDSCH occasion corresponding to the scheduled PDSCH may be determined by at least one of the following methods.

According to a first method, for the PDSCH scheduled by the DCI not including the field, the UE may always assume a specific index. For example, the UE may assume that the index of the PDSCH scheduled by the DCI not including the field is 0. In another example, the UE may assume that the index of the PDSCH scheduled by the DCI not including the field is N-1. In still another example, the base station may configure a hypothetical index for the UE. That is, the index of the PDSCH scheduled by the DCI not including the field is assumed to be a specific index (e.g., index 2) configured by the base station.

According to a second method, the index may be determined according to time domain resource allocation information on the scheduled PDSCH. For example, the DCI may include a field indicating the time domain allocation information on the PDSCH. The field may be referred to as a time domain resource assignment (TDRA) field. The TDRA field may include a TDRA table index. An entry of a TDRA table corresponding to the TDRA table index includes information on slots or symbols in which the PDSCH is scheduled. The UE may obtain or calculate the index of the PDSCH occasion, based on the indicated TDRA table index. For example, when the TDRA table index indicated in the DCI is i, the index of the corresponding PDSCH occasion may be determined to be (i mod N) or ((i-1) mod N). (i mod N) may be used when the TDRA table index starts from 0, and (i-1 mod N) may be used when the TDRA table index starts from 1.

According to a third method, the index may be determined according to a symbol index of the scheduled PDSCH. For example, the UE may determine the symbol index, based on one symbol of scheduled PDSCHs. For example, the UE may determine the symbol index, based on the index of a first symbol of the PDSCH or the index of a last symbol of the PDSCH. The symbol index is the index of a symbol in a slot, in which a first symbol of the slot is 0 and a last symbol of the slot is 13. When the symbol index of the PDSCH scheduled for the UE is i, the index of the corresponding PDSCH occasion may be determined to be (i mod N). According to another method, when the symbol index of the PDSCH scheduled for the UE is i, if i is included in a specific symbol index range, the index of the corresponding PDSCH occasion may be determined to be a specific PDSCH occasion index. For example, when N is 4, the index of the corresponding PDSCH occasion may be 0 if i is included in a symbol index range of {0 to A0}, the index of the corresponding PDSCH occasion may be 1 if i is included in a symbol index range of {A0+1 to A1}, the index of the corresponding PDSCH occasion may be 2 if i is included in a symbol index range of {A1+1 to A2}, and the index of the corresponding PDSCH occasion may be 3 if i is included in a symbol index range of {A2+1 to 13}. Here, $0 \leq A0 < A1 < A2 \leq 13$ may be satisfied. Here, A0 = 3, A1 = 6, and A2 = 10; A0 = 2, A1 = 6, and A2 = 9; A0 = 3, A1 = 6, and A2 = 9; or A0 = 2, A1 = 6, and A2 = 10 may be satisfied. In addition, A0, A1, and A2 may be configured by the base station for the UE.

According to a fourth method, the index may be determined according to information on time when the scheduling DCI is transmitted. For example, the UE may determine the index of the PDSCH occasion corresponding to the PDSCH scheduled by the DCI, based on the index of a slot in which the DCI scheduling the PDSCH is transmitted. Here, the scheduling DCI may be transmitted through a PDCCH. The index of the slot in which the DCI is transmitted refers to a slot in which the PDCCH including the DCI is received. When the index of the slot is i, the index of the corresponding PDSCH occasion may be determined to be (i mod N). That is, the base station may schedule PDSCHs through DCI transmitted in different slots, thereby determining PDSCH occasion indexes of the respective PDSCHs to be different.

According to a fifth method, the index may be determined according to information on a frequency where the scheduling DCI is transmitted. For example, the UE may determine the index of the PDSCH occasion corresponding to the PDSCH scheduled by the DCI, based on the index of CCEs mapped to the PDCCH including the DCI scheduling the PDSCH. Here, one CCE or a plurality of CCEs may be mapped to the PDCCH. When the plurality of CCEs is mapped, a CCE with a lowest index may be used. When the index of the CCE is i, the UE may determine the index of the corresponding PDSCH occasion to be (i mod N). That is, the base station may schedule PDSCHs through DCI transmitted in different CCEs, thereby determining PDSCH occasion indexes of the respective PDSCHs to be different.

According to a sixth method, the index of the PDSCH occasion may be determined according to the index of a CORESET or a search space in which the scheduling DCI is transmitted. For example, the UE may determine the index of the PDSCH occasion corresponding to the PDSCH scheduled by the DCI, based on the index of CCEs mapped to the PDCCH including the DCI scheduling the PDSCH, based on the index of a CORESET or a search space in which the PDCCH including the DCI scheduling the PDSCH is monitored. For reference, the PDCCH may be repeatedly transmitted in two linked search spaces. In this case, the index of the PDSCH occasion may be determined based on one search space (e.g., a search space with a low index). When the index of the CORESET or the search space is i, the UE may determine the index of the corresponding PDSCH occasion to be (i mod N). That is, the base station may schedule PDSCHs through DCI transmitted in different CORESETs or search spaces, thereby determining PDSCH occasion indexes of the respective PDSCHs to be different.

According to a seventh method, the index of the PDSCH occasion may be determined based on a value of a HARQ process number field of the scheduling DCI. The DCI scheduling the PDSCH may include a field indicating a HARQ process number of the scheduled PDSCH. The UE may obtain the HARQ process number of the scheduled PDSCH, based on the field. When the HARQ process number identified by the UE is i, the index of the corresponding PDSCH occasion may be determined to be (i mod N). That is, the base station may schedule PDSCHs through DCI in which different HARQ process numbers are configured, thereby determining PDSCH occasion indexes of the respective PDSCHs to be different. Although the HARQ process number field is used for description, the index of the PDSCH occasion may be determined based on the value of other fields included in the DCI, for example, TPC command for PUCCH, MCS, and RV fields.

The UE may be configured to receive an SPS PDSCH in a slot. A HARQ-ACK bit of the SPS PDSCH may be included in a HARQ-ACK codebook. To include the HARQ-ACK bit of the SPS PDSCH in the HARQ-ACK codebook, the UE needs to determine the index of a PDSCH occasion corresponding to the SPS PDSCH. The following methods may be used.

According to a first method, the index of the PDSCH occasion may be configured in an SPS PDSCH configuration. The UE may receive the SPS PDSCH configuration through an upper-layer signal (RRC signal) of the base station. The index of the PDSCH occasion corresponding to the SPS PDSCH received according to the SPS PDSCH configuration may always be the configured index.

According to a second method, the index of the PDSCH occasion may be indicated in DCI activating an SPS PDSCH. For example, a field indicating the index of the corresponding PDSCH occasion may be included in the DCI activating the SPS PDSCH. The index of the PDSCH occasion indicated in the field may be commonly applied to all SPS PDSCHs activated by the DCI. For reference, when the field is absent in the DCI activating the SPS PDSCH, the UE may obtain or calculate the index of the PDSCH occasion corresponding to the SPS PDSCH by using the foregoing methods for a case in which the DCI does not include the field.

Referring to FIG. 12B, the UE may determine a correspondence relationship between the received PDSCH and the PDSCH occasion, based on the index of the received PDSCH. For example, the index of PDSCH#1 received in slot n-3 may be 0, and the index of PDSCH#2 received in slot n-3 may be 1. The two received PDSCHs may respectively correspond to the two PDSCH occasions (first PDSCH occasion and second PDSCH occasion) included in slot n-3. PDSCH#1 having the lower index may correspond to the first PDSCH occasion, and PDSCH#2 having the higher index may correspond to the second PDSCH occasion. The index of PDSCH#3 received in slot n-2 may be 0, and the index of PDSCH#4 received in slot n-2 may be 1. The two received PDSCHs may respectively correspond to the two PDSCH occasions (third PDSCH occasion and fourth PDSCH occasion) included in slot n-2. PDSCH#3 having the lower index may correspond to the third PDSCH occasion, and PDSCH#4 having the higher index may correspond to the fourth PDSCH occasion.

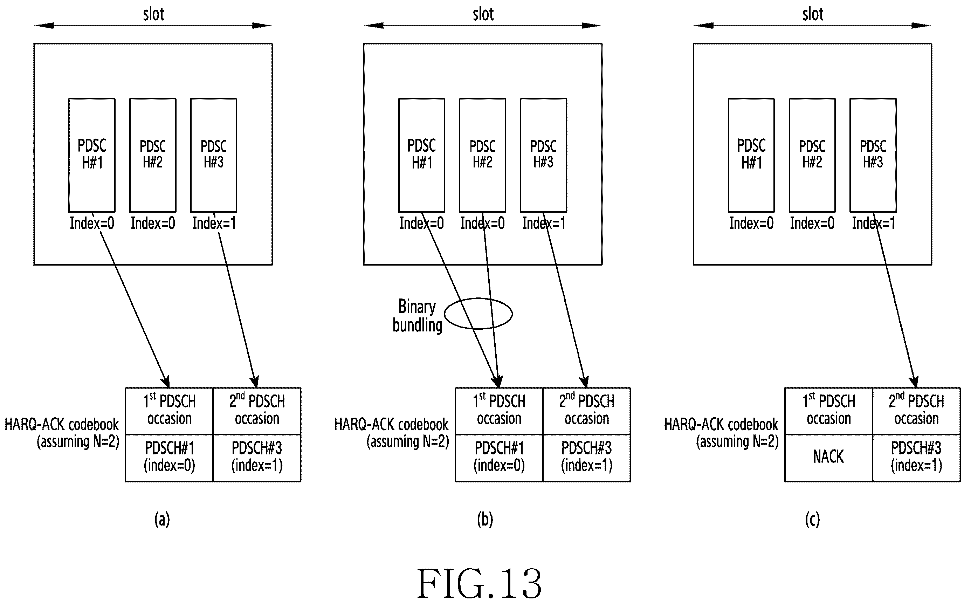

FIG. 13 illustrates a case in which a UE receives two or more PDSCHs having the same index in one slot according to an embodiment of the disclosure.

Referring to FIG. 13, the UE may receive scheduling of three PDSCHs in one slot. For reference, the UE may be assumed to have a UE capability to process three or more PDSCHs in one slot. However, the base station may configure a number (e.g., N = 2) smaller than 3 as the second information. Two PDSCHs (PDSCH#1 and PDSCH#2) of the three PDSCHs may have the same index of 0, and the other one PDSCH (PDSCH#3) may have an index of 1. A HARQ-ACK codebook according to the UE capability may include two PDSCH occasions since N = 2. In this case, the UE needs to determine how the two PDSCHs (PDSCH#1 and PDSCH#2) having the same index correspond to the PDSCH occasions.

The UE may receive scheduling of only one PDSCH corresponding to one PDSCH occasion. That is, when two or more PDSCHs correspond to a PDSCH occasion, the UE may consider this case as an error.

When a plurality of PDSCHs corresponds to one PDSCH occasion, the UE may generate a HARQ-ACK bit corresponding to the PDSCH occasion by at least one of the following methods.

Referring to FIG. 13A, according to a first method, the UE may select one of the plurality of PDSCHs. When generating a HARQ-ACK codebook, the UE may include a HARQ-ACK bit of the selected one PDSCH in the position of a HARQ-ACK bit of the corresponding PDSCH occasion. For example, the UE may select a PDSCH from the PDSCHs, based on time (position of a scheduled symbol). The UE may select a PDSCH that is first in time (scheduled symbol that is first). For example, the UE may select a PDSCH scheduled last. That is, the UE may select a PDSCH corresponding to DCI received last among DCIs scheduling the plurality of PDSCHs. For example, the UE may select a PDSCH scheduled by DCI among the plurality of PDSCHs. That is, when a PDSCH scheduled by DCI and an SPS PDSCH correspond to the same PDSCH occasion, the UE may select the PDSCH scheduled by the DCI. For example, the UE may select one PDSCH, based on the HARQ process number values of the plurality of PDSCHs. That is, the UE may select a PDSCH having a lowest HARQ process number value. For example, when the plurality of PDSCHs is SPS PDSCHs, the UE may select a PDSCH, based on the indexes of the SPS PDSCHs (indexes included in SPS PDSCH configuration information). That is, the UE may select an SPS PDSCH having a lowest index.

Referring to FIG. 13B, according to a second method, when all PDSCHs corresponding to the one PDSCH occasion are successfully received, the UE may include an ACK in a HARQ-ACK codebook with corresponding HARQ-ACK bits, and when at least one of the PDSCHs corresponding to the one PDSCH occasion fails to be received, the UE may include a NACK in the HARQ-ACK codebook with a corresponding HARQ-ACK bit. That is, the UE may obtain or calculate the HARQ-ACK bits of the PDSCHs corresponding to the one PDSCH occasion, and may subject the HARQ-ACK bits to binary bundling to generate a single HARQ-ACK bit. Here, the binary bundling may refer to an operation of determining an ACK when all HARQ-ACK bits are an ACK and determining a NACK otherwise.

In the second method, the UE receives all PDSCHs corresponding to the one PDSCH occasion, and generates the corresponding HARQ-ACK bits. According to the first method, the UE may receive some of the PDSCHs corresponding to the one PDSCH occasion, and may include an ACK in the HARQ-ACK codebook with HARQ-ACK bits corresponding to the one PDSCH occasion to which some PDSCHs correspond when some PDSCHs are successfully received. In addition, when at least one of some PDSCHs fails to be received, the UE may include a NACK in the HARQ-ACK codebook with the HARQ-ACK bits corresponding to the one PDSCH occasion to which some PDSCHs correspond.

Referring to FIG. 13C, according to a third method, when the plurality of PDSCHs corresponds to the one PDSCH occasion, the UE may include a NACK in a HARQ-ACK codebook with a HARQ-ACK bit of the PDSCH occasion. That is, when the plurality of PDSCHs corresponds to the PDSCH occasion, the UE may not receive the plurality of PDSCHs, and may generate a NACK.

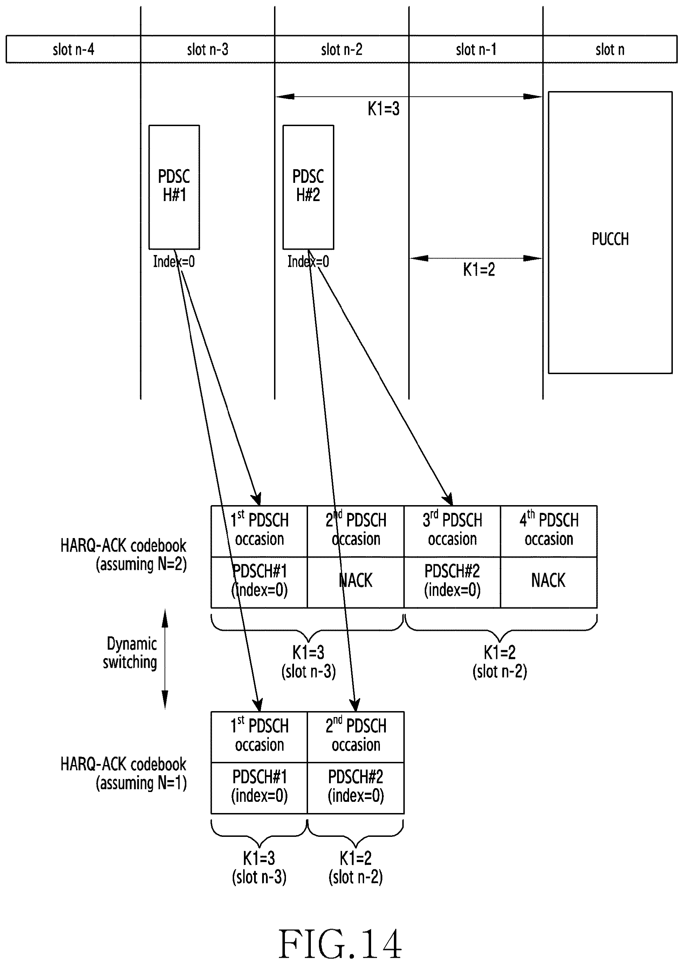

FIG. 14 illustrates a change of a HARQ-ACK codebook according to the maximum number of PDSCHs to process in one slot according to an embodiment of the disclosure.

It is assumed that the maximum number of PDSCHs that a UE is able to process in one slot is a number greater than or equal to 2. In this case, a base station may indicate 1 or 2 as the maximum number of PDSCHs to process in one slot to the UE. Referring to FIG. 14, when the base station schedules one PDSCH for each slot for the UE and indicates the maximum number of PDSCHs to process in one slot that is 2 to the UE, the UE may generate two PDSCH occasions per slot. In a HARQ-ACK codebook, two HARQ-ACK bits per slot are included. However, when the maximum number of PDSCHs to process that is 2 is indicated to the UE, the UE generates one PDSCH occasion per slot. Accordingly, a HARQ-ACK codebook includes only one HARQ-ACK bit per slot. Therefore, when the maximum number of PDSCHs to process is indicated to the UE according to the number of PDSCHs actually scheduled, the UE may more efficiently generate a HARQ-ACK codebook.

The size of a HARQ-ACK codebook is determined according to a configuration (second information) of the maximum number of PDSCHs to process in one slot. The base station may change the maximum number of PDSCHs to process in one slot due to UE traffic information and scheduler implementation. The change may be forwarded through DCI, a MAC-CE, or an RRC signal.

When the change is forwarded through DCI, the size may be determined by at least one of the following two methods.

According to a first method, DCI scheduling a PDSCH may include a configuration of the maximum number of PDSCHs to process in one slot. The UE may receive the configuration of the maximum number of PDSCHs to process in one slot through the DCI scheduling the PDSCH, and may generate a HARQ-ACK codebook, based on the value. The UE may expect that the same value is always configured in DCI scheduling PDSCHs corresponding to the same HARQ-ACK codebook. That is, the base station needs to include the same value (the maximum number of PDSCHs to process in one slot) in DCI scheduling PDSCHs corresponding to the same HARQ-ACK codebook. The UE may receive at least one DCI, thereby determining the size of a HARQ-ACK codebook corresponding to HARQ-ACK bits of PDSCHs scheduled by the DCI.

Information on the configuration of the maximum number of PDSCHs to process in one slot in the DCI may be included as follows.

The DCI may include a 1-bit field. When the 1 bit is "0," up to one PDSCH may be scheduled in one slot for the UE. When the 1 bit is "1," the maximum number of PDSCHs schedulable in one slot for the UE may be a value configured in an upper-layer signal (RRC signal) or a value determined according to a UE capability.

The DCI may include a 1-bit field. When the 1 bit is "0," a first value may be determined as the maximum number of PDSCHs schedulable in one slot. When the 1 bit is "1," a second value may be determined as the maximum number of PDSCHs schedulable in one slot. The first value and the second value may be two values among 1, 2, 4, and 7. In another example, the base station may configure values corresponding to the first value and the second value for the UE.

The DCI may include a 2-bit field. When the 2 bits are "00," the UE may use the maximum number of PDSCHs schedulable in one slot used for a previous HARQ-ACK codebook to generate a HARQ-ACK codebook of a currently scheduled PDSCH. That is, the same size as that of the previous HARQ-ACK codebook may be maintained. When the 2 bits are "01," the UE may use a number smaller than the maximum number of PDSCHs schedulable in one slot used for the previous HARQ-ACK codebook to generate the HARQ-ACK codebook of the currently scheduled PDSCH. That is, the UE may generate a HARQ-ACK codebook having a smaller size than the previous HARQ-ACK codebook. When the 2 bits are "10," the UE may use a number greater than the maximum number of PDSCHs schedulable in one slot used for the previous HARQ-ACK codebook to generate the HARQ-ACK codebook of the currently scheduled PDSCH. That is, the UE may generate a HARQ-ACK codebook having a greater size than the previous HARQ-ACK codebook. Here, the smaller number and the greater number may be numbers decreased or increased by 1, or may be predetermined values. For example, the maximum number of PDSCHs schedulable in one slot may be determined to be one value of {1, 2, 4, 7}.

The DCI may include a 2-bit field. When the 2 bits are "00," the UE may determine a first value as the maximum number of PDSCHs schedulable in one slot. When the 2 bits are "01," the UE may determine a second value as the maximum number of PDSCHs schedulable in one slot. When the 2 bits are "10," the UE may determine a third value as the maximum number of PDSCHs schedulable in one slot. When the 2 bits are "11," the UE may determine a fourth value as the maximum number of PDSCHs schedulable in one slot. Here, the first value, the second value, the third value, and the fourth value may be 1, 2, 4, and 7, respectively. In another example, the base station may configure values corresponding to the first value, the second value, the third value, and the fourth value for the UE.

According to a second method, DCI not scheduling a PDSCH may include the maximum number of PDSCHs to process in one slot. The UE may transmit HARQ-ACK information in response to the DCI to the base station, and after a specific time point after the transmission, the UE may generate a HARQ-ACK codebook, based on the maximum number of PDSCHs to process in one slot included in the DCI. Before the specific time point, the maximum number of PDSCHs to process in one slot included in the DCI may not be applied. Here, the specific time point may be a first slot after a predetermined time (e.g., 3 ms) from symbols or a slot transmitting the HARQ-ACK information in response to the DCI.

According to an embodiment of the disclosure, the UE may reduce the size of a HARQ-ACK codebook according to a UE capability. The UE may reduce the size of the codebook, based on a time domain resource assignment (TDRA) table and a TDD configuration.

The TDD configuration includes the types of symbols that the base station configures for the UE through a system information block (SIB) or an RRC signal. The symbols may be configured as one type of a downlink symbol, an uplink symbol, and a flexible symbol. A downlink symbol is a symbol in which downlink reception is possible and uplink transmission is impossible for the UE. An uplink symbol is a symbol in which uplink transmission is possible and downlink reception is impossible for the UE. A flexible symbol is a symbol in which downlink reception or uplink transmission is possible for the UE.

The UE may determine whether to include HARQ-ACK bits in a HARQ-ACK codebook, based on the symbol type of slots for transmitting the HARQ-ACK bits of the UE. For example, when all of the slots for transmitting the HARQ-ACK bits are configured as an uplink symbol, the UE is unable to receive a PDSCH in the slots. Therefore, the UE may exclude the HARQ-ACK bits for the slots from the HARQ-ACK codebook.

The UE may determine whether to include HARQ-ACK bits in a HARQ-ACK codebook, based on the symbol type of slots for transmitting the HARQ-ACK bits of the UE and a TDRA table configuration. A TDRA table may include one or a plurality of starting and length indication values (SLIVs) indicating symbols in which the UE may receive a PDSCH in slots. The UE may determine whether each SLIV of the TDRA table overlaps with an uplink symbol. When all SLIVs overlap with an uplink symbol, a PDSCH may not be scheduled in the slots for the UE. Therefore, the UE may exclude the HARQ-ACK bits for the slots from the HARQ-ACK codebook.

The UE configured to use the HARQ-ACK codebook according to the UE capability may change a method for including HARQ-ACK bits of a slot of the HARQ-ACK codebook, based on a TDRA table configuration. A method in which the UE includes HARQ-ACK bits may be at least one of the following methods.

- A first method is the UE including HARQ-ACK bits for N PDSCH occasions of a slot according to the second embodiment of the disclosure. Here, N is the maximum number of PDSCHs that the UE is able to process in one slot. Therefore, the UE may include N HARQ-ACK bits for one slot. (Here, it is assumed that one PDSCH occasion corresponds to 1 HARQ-ACK bit. When one PDSCH occasion corresponds to a plurality of HARQ-ACK bits, different HARQ-ACK bits may be used instead of N HARQ-ACK bits.)

- A second method is the UE including HARQ-ACK bits of a slot, based on SLIVs of a TDRA table as in a Type-1 HARQ-ACK codebook. More specifically, the UE allocates one HARQ-ACK bit to a bundle of an SLIV ending in a symbol that is first in time among the SLIVs of the TDRA table and SLIVs overlapping with the SLIV. Then, the UE excludes the SLIVs from the TDRA table. For the remaining SLIVs, the UE may continue to allocate one HARQ-ACK bit to a bundle of an SLIV ending in a symbol that is first in time and SLIVs overlapping with the SLIV. Then the UE excludes the SLIVs from the TDRA table. This process may be continued until there is no SLIV in the TDRA table. For example, an SLIV overlapping with an uplink symbol the SLIVs included in the TDRA table may be first excluded from the TDRA table.

The UE may include HARQ-ACK bits by selecting one of the first and second methods for each slot. For example, when a smaller number of HARQ-ACK bits in a slot are determined by one of the first and second methods, the UE may generate HARQ-ACK bits of the slot by using the one method.

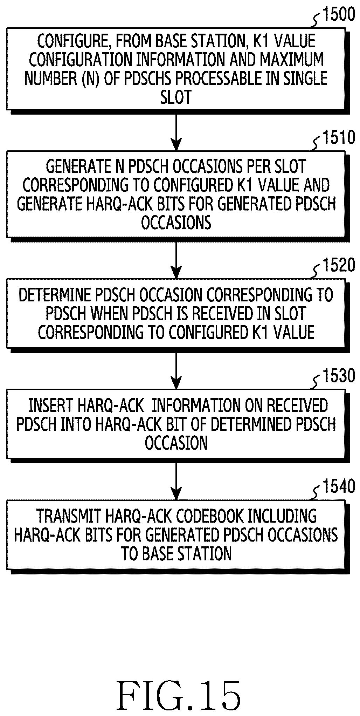

FIG. 15 is a flowchart of generating a HARQ-ACK codebook according to a UE capability according to an embodiment of the disclosure.

In a first step 1500, a UE may receive K1 value configuration information and a configuration of the maximum number N of PDSCHs to process in one slot from a base station. In this case, when the base station does not configure the maximum number of PDSCHs to process in one slot for the UE, the UE may assume the maximum number of PDSCHs to process in one slot determined according to a UE capability.

In a second step 1510, the UE may determine slots corresponding to a configured K1 value, and may generate N PDSCH occasions per slot. The UE may generate a HARQ-ACK bit corresponding to each generated PDSCH occasion. The slot corresponding to the configured K1 value (k1) may be determined to be slot n-k1 when the index of a slot in which an HARQ-ACK is transmitted is slot n.

In a third step 1520, the UE may determine a PDSCH occasion corresponding to a PDSCH received in the slot corresponding to the configured K1 value. For the correspondence relationship, an index may be assigned to a received PDSCH, and a PDSCH occasion corresponding to each index may exist. Here, the index may be one of 0, 1, ..., and N-1.

In a fourth step 1530, the UE may include HARQ-ACK information (ACK or NACK) about the received PDSCH in the HARQ-ACK bit of the determined PDSCH occasion. When the PDSCH corresponding to the PDSCH occasion is not received, the UE may indicate that the HARQ-ACK information on the PDSCH occasion is 0.

In a fifth step 1540, the UE may transmit a HARQ-ACK codebook including the HARQ-ACK bits for the generated PDSCH occasions to the base station. The codebook may be transmitted through a PUCCH or a PUSCH.

[Third embodiment: Compact Type-1 HARQ-ACK codebook method]

To reduce the size of a Type-1 HARQ-ACK codebook, a base station may configure a virtual TDRA table for determining the number of HARQ-ACK bits for a UE. The virtual TDRA table may include SLIVs. The virtual TDRA table is configured for determining the number of HARQ-ACK bits of the Type-1 HARQ-ACK codebook, and may differ from a TDRA table used for actual scheduling.

For reference, the virtual TDRA table may include only some of SLIVs of the TDRA table used for actual scheduling. That is, a SLIV included in the virtual TDRA table is one of the SLIVs of the TDRA table used for actual scheduling. Therefore, the base station may configure an index of the actual TDRA table for the UE, thereby configuring the SLIVs included in the virtual TDRA table.

The UE may determine the number of HARQ-ACK bits for one slot, based on the SLIVs of the virtual TDRA table. More specifically, the UE allocates one HARQ-ACK bit to a bundle of an SLIV ending in a symbol that is first in time among the SLIVs of the virtual TDRA table and SLIVs overlapping with the SLIV. Then, the UE excludes the SLIVs from the virtual TDRA table. For the remaining SLIVs, the UE may continue to allocate one HARQ-ACK bit to a bundle of an SLIV ending in a symbol that is first in time and SLIVs overlapping with the SLIV. Then the UE excludes the SLIVs from the virtual TDRA table. This process may be continued until there is no SLIV in the TDRA table. For example, an SLIV overlapping with an uplink symbol the SLIVs included in the virtual TDRA table may be first excluded from the TDRA table.

The UE may determine a correspondence relationship between the SLIVs of the TDRA table to be used for actual scheduling and the HARQ-ACK bits. For example, the UE may select a first SLIV (ending in a symbol that is first) among SLIVs of the virtual TDRA tables overlapping an SLIV (hereinafter, actual SLIV) of the TDRA table to be used for actual scheduling, and may determine a HARQ-ACK bit corresponding to the selected SLIV as a bit for transmitting HARQ-ACK information of a PDSCH scheduled with the actual SLIV.

For reference, when configuring the virtual TDRA table for the UE, the base station may configure the virtual TDRA table such that the SLIVs of the virtual TDRA table do not overlap in symbols. In this configuration, when the UE obtains or calculates HARQ-ACK bits, based on the virtual TDRA table, the UE may not perform an operation of determining and removing overlapping SLIVs. That is, implementation complexity of the UE may be reduced.

For reference, when configuring the virtual TDRA table for the UE, the base station may configure the virtual TDRA table such that the SLIVs of the virtual TDRA table include all symbols of a slot. That is, each symbol of the slot may overlap at least one SLIV.

A UE configured to use the Type-1 HARQ-ACK codebook may change a method for including HARQ-ACK bits of a slot of the HARQ-ACK codebook, based on the maximum number of PDSCHs to process in one slot. A method in which the UE includes HARQ-ACK bits may be at least one of the following methods.

- A first method is the UE including HARQ-ACK bits for N PDSCH occasions of a slot according to the second embodiment of the disclosure. Here, N is the maximum number of PDSCHs that the UE is able to process in one slot. Therefore, the UE may include N HARQ-ACK bits for one slot. (Here, it is assumed that one PDSCH occasion corresponds to 1 HARQ-ACK bit. When one PDSCH occasion corresponds to a plurality of HARQ-ACK bits, different HARQ-ACK bits may be used instead of N HARQ-ACK bits.)

- A second method is the UE including HARQ-ACK bits of a slot, based on SLIVs of a TDRA table as in a Type-1 HARQ-ACK codebook. More specifically, the UE allocates one HARQ-ACK bit to a bundle of an SLIV ending in a symbol that is first in time among the SLIVs of the TDRA table and SLIVs overlapping with the SLIV. Then, the UE excludes the SLIVs from the TDRA table. For the remaining SLIVs, the UE may continue to allocate one HARQ-ACK bit to a bundle of an SLIV ending in a symbol that is first in time and SLIVs overlapping with the SLIV. Then the UE excludes the SLIVs from the TDRA table. This process may be continued until there is no SLIV in the TDRA table. For example, an SLIV overlapping with an uplink symbol the SLIVs included in the TDRA table may be first excluded from the TDRA table.

The UE may include HARQ-ACK bits in a HARQ-ACK codebook by selecting one of the first and second methods for each slot. For example, when a smaller number of HARQ-ACK bits in a slot are determined by one of the first and second methods, the UE may generate HARQ-ACK bits of the slot by using the one method.

[Fourth embodiment: Method for determining HARQ-ACK codebook type]

A UE may support design of two or more HARQ-ACK codebooks. For example, the UE may simultaneously generate the following two HARQ-ACK codebooks.

- First HARQ-ACK codebook, which is HARQ-ACK codebook according to UE capability (second embodiment)
- Second HARQ-ACK codebook, which is Type-3 HARQ-ACK codebook

For reference, the two HARQ-ACK codebooks are for illustration, and the embodiments of the disclosure may be applied to other HARQ-ACK codebooks. In addition, although a description is made with reference to the two HARQ-ACK codebooks for descriptive convenience, the embodiment of the disclosure may be applied to two or more HARQ-ACK codebooks (e.g., the embodiment may be equally applied to three HARQ-ACK codebooks).

The Type-3 HARQ-ACK codebook (or one-shot codebook) is a method for the UE to all HARQ-ACK information on the numbers of all serving cells and HARQ processes configured for the UE, the number of TBs for each HARQ process, and the number of CBGs for each TB. For example, when the UE has two serving cells, 16 HARQ processes for each serving cell, one TB for each HARQ process, and two CBGs for each TB, the UE may report a total of 64 (= 2 * 16 * 1 * 2) HARQ-ACK information bits.

The Type-3 HARQ-ACK codebook may enumerate HARQ-ACK information bits according to a sequence. The sequence is as follows.

- The bits may be arranged in an ascending order of indexes of serving cells.
- Within the same serving cell, the bits may be arranged in an ascending order of HARQ processes.
- When a plurality of TBs is included in the same HARQ process (i.e., in a case of 2-TB transmission), HARQ-ACK information on a first TB may be arranged in a position before HARQ-ACK information on a second TB.
- When a plurality of CBGs is included in the same TB (i.e., in a case of CBG-based PDSCH transmission), the bits may be arranged in an ascending order of indexes of the CBGs.

According to an embodiment of the disclosure, the UE may determine the length of each HARQ-ACK codebook. For example, in a case of the first HARQ-ACK codebook, the length of the HARQ-ACK codebook may be {number of slots corresponding to K1 value * maximum number of PDSCHs to process in one slot}. For reference, the number of slots corresponding to the K1 value may vary according to TDD configuration information. In a case of the second HARQ-ACK codebook, the length of the HARQ-ACK codebook may be equal to the number of configured HARQ process numbers.

The UE may compare the lengths of the two HARQ-ACK codebooks. When the length of the first HARQ-ACK codebook is shorter than the length of the second HARQ-ACK codebook, the UE may select the first HARQ-ACK codebook. When the length of the second HARQ-ACK codebook is shorter than the length of the first HARQ-ACK codebook, the UE may select the second HARQ-ACK codebook. That is, when the UE is able to generate two or more HARQ-ACK codebooks, the UE may select one of the HARQ-ACK codebooks, based on the length of the HARQ-ACK codebook.

The UE may transmit the selected HARQ-ACK codebook to the base station. The HARQ-ACK codebook may be transmitted through a PUCCH or a PUSCH.

By selecting a HARQ-ACK codebook having a shorter length and transmitting the codebook to the base station, the UE may reduce uplink resource overhead. For reference, the base station may know the length of a HARQ-ACK codebook to be generated by the UE. Therefore, the base station may know in advance which HARQ-ACK codebook the UE is to transmit.

According to an embodiment of the disclosure, the type of a HARQ-ACK codebook to be used by the UE may be indicated through DCI. More specifically, the base station may configure the type of the HARQ-ACK codebook available for the UE. In addition, the UE may receive an indication of the type of the HARQ-ACK codebook to use from the DCI. For example, when the base station configures the first HARQ-ACK codebook and the second HARQ-ACK codebook for the UE, the DCI may include a field for selecting one of the two codebooks. The UE may generate a HARQ-ACK codebook, based on the field. For reference, the DCI may be a DCI format for scheduling a PDSCH.

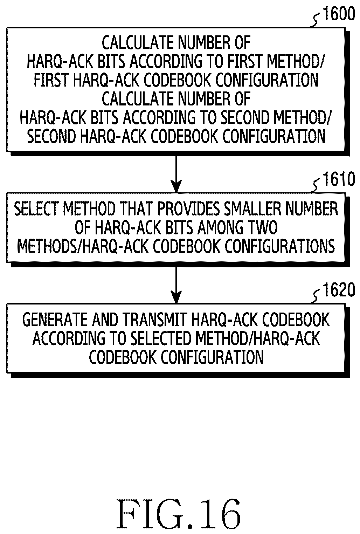

FIG. 16 is a flowchart of selecting a HARQ-ACK codebook type according to an embodiment of the disclosure.

In a first step 1600, a UE may calculate the number of HARQ-ACK bits included in a HARQ-ACK codebook according to a first method or a first HARQ-ACK codebook configuration. In addition, the UE may calculate the number of HARQ-ACK bits included in a HARQ-ACK codebook according to a second method to a second HARQ-ACK codebook configuration.

In a second step 1610, the UE may compare the numbers of HARQ-ACK bits determined according to the two methods or the two HARQ-ACK codebook configurations. The UE may select a method or a HARQ-ACK codebook configuration that provides a smaller number of HARQ-ACK bits among the numbers of HARQ-ACK bits determined according to the two methods or the two HARQ-ACK codebook configurations.

In a third step 1620, the UE may generate a HARQ-ACK codebook according to the selected method or the selected HARQ-ACK codebook configuration, and may transmit the codebook to the base station.

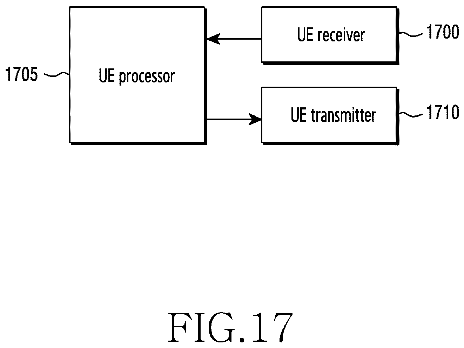

FIG. 17 illustrates a structure of a UE in a wireless communication system according to an embodiment of the disclosure.

Referring to FIG. 17, the UE may include a transceiver, which refers to a UE receiver 1700 and a UE transmitter 1710 as a whole, a memory (not illustrated), and a UE processor 1705 (or UE controller or processor). The UE transceiver 1700 and 1710, the memory, and the UE processor 1705 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations or other UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform the operation of controlling the components of the UE by executing programs stored in the memory.

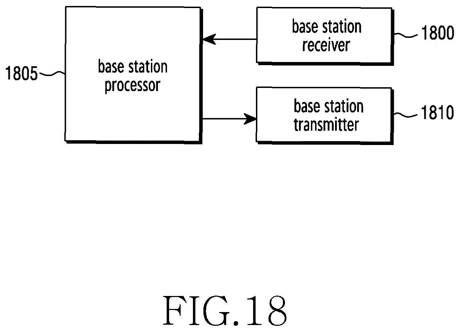

FIG. 18 illustrates a structure of a base station in a wireless communication system according to an embodiment of the disclosure.

Referring to FIG. 18, the base station may include a transceiver, which refers to a base station receiver 1800 and a base station transmitter 1810 as a whole, a memory (not illustrated), and a base station processor 1805 (or base station controller or processor). The base station transceiver 1800 and 1810, the memory, and the base station processor 1805 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs or other base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

The disclosure proposes a method of designing a HARQ-ACK codebook according to a UE capability.

A UE may report the maximum number of PDSCHs to receive (process) per slot to a base station. The UE may generate a HARQ-ACK codebook, based on the maximum number of PDSCHs.

The HARQ-ACK codebook transmitted in slot n may include as many HARQ-ACK bits as the number of K1 values * the maximum number of PDSCHs. Here, a b-th bit indicates HARQ-ACK information on an i-th PDSCH received in slot n-K1,k. Here, k = floor(n/number of configured K1 values), i = b-k * number of configured K1 values, and K1,k is a k-th K1 value among the configured K1 values.

When the maximum number of PDSCHs the UE is able to receive (process) per slot is greater than 2 (2, 4, or 7), the UE needs to determine the order of a PDSCH (i-th PDSCH) received in a slot. To this end, the following method may be considered.

A DCI format scheduling a PDSCH may indicate the order of a PDSCH received in a slot. For example, when "0" is indicated, a PDSCH is determined as a 0th PDSCH.

The order of a PDSCH may be determined, based on time domain allocation information and/or frequency domain allocation information on the PDSCHs. For example, when the starting symbol/RB of a received PDSCH is a specific index, the UE may determine the order of the PDSCH, based on the specific index. Alternatively, when the number of symbols/RBs included in a received PDSCH is a specific number, the UE may determine the order of the PDSCH, based on the specific number.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a user equipment (UE). As an example, a part of a first embodiment of the disclosure may be combined with a part of a second embodiment to operate a base station and a UE. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1.    A method performed by a user equipment (UE) in a wireless communication system, the method comprising:

   transmitting, to a base station, capability information on a maximum number of physical downlink shared channels (PDSCHs) receivable by the UE in one slot;
   receiving, from the base station, configuration information including first information including at least one slot offset value between each of at least one PDSCH reception slot and a transmission slot of a hybrid automatic repeat request acknowledgement (HARQ-ACK) codebook and second information on a maximum number of PDSCHs scheduled in one slot;
   determining at least one PDSCH reception slot, based on the first information;
   generating a HARQ-ACK codebook comprising as many pieces of HARQ-ACK information as a maximum number of PDSCHs schedulable in each of the determined at least one PDSCH reception slot, based on the second information, the HARQ-ACK information being configured for each of the determined at least one PDSCH reception slot; and
   transmitting the generated HARQ-ACK codebook to the base station.

2.    The method of claim 1, wherein PDSCHs scheduled in the PDSCH reception slot corresponding to the HARQ-ACK information include a PDSCH scheduled by downlink control information (DCI),

   wherein each of the PDSCHs scheduled in the PDSCH reception slot corresponding to the HARQ-ACK information is allocated an order within the PDSCH reception slot, and
   wherein a position of the HARQ-ACK information in the HARQ-ACK codebook is determined according to the order in the PDSCH reception slot.

3.    The method of claim 2, wherein, in case that the DCI includes a field indicating the order of the PDSCH scheduled by the DCI in the PDSCH reception slot, the order of the PDSCH scheduled by the DCI in the PDSCH reception slot is allocated by the field, and
   wherein, in case that the DCI does not include a field indicating the order of the PDSCH scheduled by the DCI in the PDSCH reception slot, the order of the PDSCH occasion scheduled by the DCI in the PDSCH reception slot is configured as being first.

4.    The method of claim 1, wherein, in case that the UE is able to receive different maximum numbers of PDSCHs in one slot, based on a number of physical resource blocks (PRBs) allocated to the PDSCHs, the maximum number of PDSCHs that the UE is able to receive in one slot, included in the capability information, is determined as one of the different maximum numbers.

5.    The method of claim 1, further comprising:

   receiving, from the base station, information for changing the maximum number of PDSCH occasions scheduled in one slot, configured based on the second information,
   wherein the information for changing the maximum number is configured based on DCI, a medium access control (MAC)-control element (CE), or radio resource control (RRC).

6.    A method performed by a base station in a wireless communication system, the method comprising:

receiving, from a user equipment (UE), capability information on a maximum number of physical downlink shared channels (PDSCHs) receivable by the UE in one slot;

transmitting, to the UE, configuration information including first information including at least one slot offset value between each PDSCH reception slot and a transmission slot of a hybrid automatic repeat request acknowledgement (HARQ-ACK) codebook and second information on a maximum number of PDSCH occasions scheduled in one slot; and

based on the second information, receiving, from the UE, a HARQ-ACK codebook comprising as many pieces of HARQ-ACK information as a maximum number of PDSCHs schedulable in each of at least one PDSCH reception slot determined based on the first information,

wherein the HARQ-ACK information is configured for each of the determined at least one PDSCH reception slot.

7. The method of claim 6, wherein PDSCHs scheduled in the PDSCH reception slot corresponding to the HARQ-ACK information include a PDSCH scheduled by downlink control information (DCI),

wherein each of the PDSCHs scheduled in the PDSCH reception slot corresponding to the HARQ-ACK information is allocated an order within the PDSCH reception slot, and

wherein a position of the HARQ-ACK information in the HARQ-ACK codebook is determined according to the order in the PDSCH reception slot.

8. The method of claim 7, wherein, in case that the DCI includes a field indicating the order of the PDSCH scheduled by the DCI in the PDSCH reception slot, the order of the PDSCH scheduled by the DCI in the PDSCH reception slot is allocated by the field, and

wherein, in case that the DCI does not include a field indicating the order of the PDSCH scheduled by the DCI in the PDSCH reception slot, the order of the PDSCH occasion scheduled by the DCI in the PDSCH reception slot is configured as being first.

9. The method of claim 6, wherein, in case that the UE is able to receive different maximum numbers of PDSCHs in one slot, based on a number of physical resource blocks (PRBs) allocated to the PDSCHs, the maximum number of PDSCHs that the UE is able to receive in one slot, included in the capability information, is determined as one of the different maximum numbers.

10. The method of claim 6, further comprising:

transmitting, to the UE, information for changing the maximum number of PDSCH occasions scheduled in one slot, configured based on the second information,

wherein the information for changing the maximum number is configured based on DCI, a medium access control (MAC)-control element (CE), or radio resource control (RRC).

11. A user equipment (UE) in a wireless communication system, the UE comprising:

a transceiver; and
a controller connected to the transceiver,
wherein the controller is configured to:

transmit, to a base station, capability information on a maximum number of physical downlink shared channels (PDSCHs) receivable by the UE in one slot;

receive, from the base station, configuration information including first information including at least one slot offset value between each of at least one PDSCH reception slot and a transmission slot of a hybrid automatic repeat request acknowledgement (HARQ-ACK) codebook and second information on a maximum number of PDSCHs scheduled in one slot;

determine at least one PDSCH reception slot, based on the first information;

generate a HARQ-ACK codebook comprising as many pieces of HARQ-ACK information as a maximum number of PDSCHs schedulable in each of the determined at least one PDSCH reception slot, based on the second information, the HARQ-ACK information being configured for each of the determined at least one PDSCH reception slot; and

transmit the generated HARQ-ACK codebook to the base station.

12. The UE of claim 11, wherein PDSCHs scheduled in the PDSCH reception slot corresponding to the HARQ-ACK information include a PDSCH scheduled by downlink control information (DCI),

wherein each of the PDSCHs scheduled in the PDSCH reception slot corresponding to the HARQ-ACK information is allocated an order within the PDSCH reception slot, and

wherein a position of the HARQ-ACK information in the HARQ-ACK codebook is determined according to the order in the PDSCH reception slot.

13. The UE of claim 12, wherein, in case that the DCI includes a field indicating the order of the PDSCH scheduled by the DCI in the PDSCH reception slot, the order of the PDSCH scheduled by the DCI in the PDSCH reception slot is allocated by the field, and

wherein, in case that the DCI does not include a field indicating the order of the PDSCH scheduled by the DCI in the PDSCH reception slot, the order of the PDSCH occasion scheduled by the DCI in the PDSCH reception slot is configured as being first.

14. The UE of claim 11, wherein, in case that the UE is able to receive different maximum numbers of PDSCHs in one slot, based on a number of physical resource blocks (PRBs) allocated to the PDSCHs, the maximum number of PDSCHs that the UE is able to receive in one slot, included in the capability information, is determined as one of the different maximum numbers.

15. A base station in a wireless communication system, the base station comprising:

a transceiver; and
a controller connected to the transceiver,
wherein the controller is configured to:

receive, from a user equipment (UE), capability information on a maximum number of physical downlink shared channels (PDSCHs) receivable by the UE in one slot;
transmit, to the UE, configuration information including first information including at least one slot offset value between each of at least one PDSCH reception slot and a transmission slot of a hybrid automatic repeat request acknowledgement (HARQ-ACK) codebook and second information on a maximum number of PDSCH occasions scheduled in one slot; and
based on the second information, receive, from the UE, a HARQ-ACK codebook comprising as many pieces of HARQ-ACK information as a maximum number of PDSCHs schedulable in each of at least one PDSCH reception slot determined based on the first information, and
wherein the HARQ-ACK information is configured for each of the determined at least one PDSCH reception slot.

One subframe
(110)

$N_{symb}^{subframe,\,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l)
(101)

Frequency

Time

$\overline{l} = 0$

$\overline{l} = 14 \cdot 2^{\mu} - 1$

$k = 0$

FIG.1

1 frame (200)

1 subframe (201)

μ=0 (204)

| 0 | 1 | 2 | 3 | 4 | 5 | 6 | 7 | 8 | 9 |

slot (202)

μ=1 (205)

| 0 | 1 | 2 | 3 | 4 | 5 | 6 | 7 | 8 | 9 | 10 | 11 | 12 | 13 | 14 | 15 | 16 | 17 | 18 | 19 |

slot (203)

# FIG.2

FIG.3

Duration
(404)

Frequency
resources
(403)

UE bandwidth
part (410)

Frequency

Time

Slot (420)

Control resource set#1 (401)

Control resource set#2 (402)

FIG.4

FIG.5

FIG.6

715

RA type 0
(700) | Bitmap |

720 725

RA type 1
(705) | Starting VRB | Length |

730 735

Both RA type
0 & 1
(710) | 1 bit for RA type indication | Max{payload for RA type 0, payload for RA type 1} |

# FIG.7

$$\text{Slot}\left\lfloor n \cdot \frac{2^{\mu_{\text{PDSCH}}}}{2^{\mu_{\text{PDCCH}}}}\right\rfloor + K_0 \ (810)$$

# FIG.8

FIG.9

FIG.10

| slot n-4 | slot n-3 | slot n-2 | slot n-1 | slot n |
|---|---|---|---|---|

Semi-static UL symbol

# FIG.11A

FIG.11B

FIG.11C

| slot n-4 | slot n-3 | slot n-2 | slot n-1 | slot n |
|---|---|---|---|---|

FIG.12A

| slot n-4 | slot n-3 | slot n-2 | slot n-1 | slot n |
|---|---|---|---|---|

K1=3

PDSCH#1 | PDSCH#2 | PDSCH#3 | PDSCH#4

Index=0 | Index=1 | Index=0 | Index=1

K1=2

PUCCH

HARQ-ACK codebook
(assuming N=2)

| 1st PDSCH occasion | 2nd PDSCH occasion | 3rd PDSCH occasion | 4th PDSCH occasion |
|---|---|---|---|
| PDSCH#1 (index=0) | PDSCH#2 (index=1) | PDSCH#3 (index=0) | PDSCH#4 (index=1) |

K1=3
(slot n-3)

K1=2
(slot n-2)

# FIG.12B

FIG.13

EP 4 730 683 A1

| slot n-4 | slot n-3 | slot n-2 | slot n-1 | slot n |
|---|---|---|---|---|

K1=3

PDSC H#1

Index=0

PDSC H#2

Index=0

K1=2

PUCCH

HARQ-ACK codebook (assuming N=2)

| 1st PDSCH occasion | 2nd PDSCH occasion | 3rd PDSCH occasion | 4th PDSCH occasion |
|---|---|---|---|
| PDSCH#1 (index=0) | NACK | PDSCH#2 (index=0) | NACK |

K1=3 (slot n-3)

K1=2 (slot n-2)

Dynamic switching

HARQ-ACK codebook (assuming N=1)

| 1st PDSCH occasion | 2nd PDSCH occasion |
|---|---|
| PDSCH#1 (index=0) | PDSCH#2 (index=0) |

K1=3 (slot n-3)

K1=2 (slot n-2)

FIG.14

```
                                              ⌐1500
┌──────────────────────────────────────────────┐
│  CONFIGURE, FROM BASE STATION, K1 VALUE        │
│  CONFIGURATION INFORMATION AND MAXIMUM         │
│  NUMBER (N) OF PDSCHS PROCESSABLE IN SINGLE    │
│                  SLOT                          │
└──────────────────────────────────────────────┘
                      │
                      ▼                       ⌐1510
┌──────────────────────────────────────────────┐
│  GENERATE N PDSCH OCCASIONS PER SLOT           │
│  CORRESPONDING TO CONFIGURED K1 VALUE AND      │
│  GENERATE HARQ-ACK BITS FOR GENERATED PDSCH    │
│                OCCASIONS                       │
└──────────────────────────────────────────────┘
                      │
                      ▼                       ⌐1520
┌──────────────────────────────────────────────┐
│  DETERMINE PDSCH OCCASION CORRESPONDING TO     │
│  PDSCH WHEN PDSCH IS RECEIVED IN SLOT          │
│  CORRESPONDING TO CONFIGURED K1 VALUE          │
└──────────────────────────────────────────────┘
                      │
                      ▼                       ⌐1530
┌──────────────────────────────────────────────┐
│  INSERT HARQ-ACK  INFORMATION ON RECEIVED      │
│  PDSCH INTO HARQ-ACK BIT OF DETERMINED PDSCH   │
│                OCCASION                        │
└──────────────────────────────────────────────┘
                      │
                      ▼                       ⌐1540
┌──────────────────────────────────────────────┐
│  TRANSMIT HARQ-ACK CODEBOOK INCLUDING          │
│  HARQ-ACK BITS FOR GENERATED PDSCH OCCASIONS   │
│              TO BASE STATION                   │
└──────────────────────────────────────────────┘
```

# FIG.15

**1600**

CALCULATE NUMBER OF
HARQ-ACK BITS ACCORDING TO FIRST METHOD/
FIRST HARQ-ACK CODEBOOK CONFIGURATION
CALCULATE NUMBER OF
HARQ-ACK BITS ACCORDING TO SECOND METHOD/
SECOND HARQ-ACK CODEBOOK CONFIGURATION

**1610**

SELECT METHOD THAT PROVIDES SMALLER NUMBER
OF HARQ-ACK BITS AMONG TWO
METHODS/HARQ-ACK CODEBOOK CONFIGURATIONS

**1620**

GENERATE AND TRANSMIT HARQ-ACK CODEBOOK
ACCORDING TO SELECTED METHOD/HARQ-ACK
CODEBOOK CONFIGURATION

# FIG.16

1705 ~ UE processor

UE receiver ~1700

UE transmitter ~1710

# FIG.17

1805 ~ | base station processor

base station receiver ~ 1800

base station transmitter ~ 1810

# FIG.18

## INTERNATIONAL SEARCH REPORT

| International application No. |
|---|
| **PCT/KR2024/009935** |

| | |
|---|---|
| **A.** | **CLASSIFICATION OF SUBJECT MATTER** |
| | **H04L 1/1812**(2023.01)i |

According to International Patent Classification (IPC) or to both national classification and IPC

| | |
|---|---|
| **B.** | **FIELDS SEARCHED** |

Minimum documentation searched (classification system followed by classification symbols)

H04L 1/1812(2023.01); H04L 1/18(2006.01); H04L 5/00(2006.01); H04W 72/04(2009.01); H04W 72/12(2009.01); H04W 72/23(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 물리 하향링크 공유 채널(physical downlink shared channel, PDSCH), 최대 개수 (maximum number), 슬롯(slot), HARQ-ACK 코드북(codebook), 슬롯 오프셋(slot offset), 순서(order)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2022-0063725 A (ELECTRONICS AND TELECOMMUNICATIONS RESEARCH INSTITUTE) 17 May 2022 (2022-05-17) See paragraphs [0092], [0095]-[0096], [0101]-[0102], [0112], [0118], [0120] and [0129]; and claims 1-4. | 1-15 |
| A | KR 10-2020-0135528 A (CHINA ACADEMY OF TELECOMMUNICATIONS TECHNOLOGY) 02 December 2020 (2020-12-02) See paragraphs [0038]-[0041]. | 1-15 |
| A | KR 10-2022-0166843 A (DATANG MOBILE COMMUNICATIONS EQUIPMENT CO., LTD.) 19 December 2022 (2022-12-19) See paragraphs [0247]-[0253]. | 1-15 |
| A | KR 10-2023-0042420 A (WILUS INSTITUTE OF STANDARDS AND TECHNOLOGY INC.) 28 March 2023 (2023-03-28) See claims 1-6. | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2024** | **24 October 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/009935** |

**C.    DOCUMENTS CONSIDERED TO BE RELEVANT**

| Category* | Citation of document, with indication, where appropriate, of the relevant passages | Relevant to claim No. |
|---|---|---|
| A | WO 2022-206364 A1 (DATANG MOBILE COMMUNICATIONS EQUIPMENT CO., LTD.) 06 October 2022 (2022-10-06)<br>See claims 1-11. | 1-15 |

Form PCT/ISA/210 (second sheet) (July 2022)

## INTERNATIONAL SEARCH REPORT
### Information on patent family members

| International application No. |
| --- |
| **PCT/KR2024/009935** |

| Patent document cited in search report | | | Publication date (day/month/year) | Patent family member(s) | | | Publication date (day/month/year) |
| --- | --- | --- | --- | --- | --- | --- | --- |
| KR | 10-2022-0063725 | A | 17 May 2022 | US | 2022-0149996 | A1 | 12 May 2022 |
| KR | 10-2020-0135528 | A | 02 December 2020 | CN | 110324117 | A | 11 October 2019 |
| | | | | CN | 110324117 | B | 26 October 2021 |
| | | | | EP | 3780448 | A1 | 17 February 2021 |
| | | | | EP | 3780448 | B1 | 26 October 2022 |
| | | | | EP | 4120609 | A1 | 18 January 2023 |
| | | | | EP | 4120609 | B1 | 08 May 2024 |
| | | | | KR | 10-2023-0109794 | A | 20 July 2023 |
| | | | | TW | 201943219 | A | 01 November 2019 |
| | | | | TW | I788545 | B | 01 January 2023 |
| | | | | US | 11736237 | B2 | 22 August 2023 |
| | | | | US | 2021-0099255 | A1 | 01 April 2021 |
| | | | | US | 2023-0353286 | A1 | 02 November 2023 |
| | | | | WO | 2019-184943 | A1 | 03 October 2019 |
| KR | 10-2022-0166843 | A | 19 December 2022 | CN | 113543348 | A | 22 October 2021 |
| | | | | CN | 113543348 | B | 16 August 2024 |
| | | | | EP | 4138499 | A1 | 22 February 2023 |
| | | | | EP | 4138499 | A4 | 20 December 2023 |
| | | | | JP | 2023-526741 | A | 23 June 2023 |
| | | | | JP | 7415044 | B2 | 16 January 2024 |
| | | | | US | 2023-0171040 | A1 | 01 June 2023 |
| | | | | WO | 2021-208854 | A1 | 21 October 2021 |
| KR | 10-2023-0042420 | A | 28 March 2023 | CN | 111052653 | A | 21 April 2020 |
| | | | | CN | 111052653 | B | 15 November 2022 |
| | | | | CN | 115765922 | A | 07 March 2023 |
| | | | | CN | 115765923 | A | 07 March 2023 |
| | | | | CN | 115801182 | A | 14 March 2023 |
| | | | | EP | 3664338 | A1 | 10 June 2020 |
| | | | | EP | 3664338 | A4 | 05 May 2021 |
| | | | | EP | 3664338 | B1 | 17 August 2022 |
| | | | | EP | 4106240 | A1 | 21 December 2022 |
| | | | | EP | 4117211 | A1 | 11 January 2023 |
| | | | | ES | 2930416 | T3 | 12 December 2022 |
| | | | | JP | 2020-529780 | A | 08 October 2020 |
| | | | | JP | 2022-160582 | A | 19 October 2022 |
| | | | | JP | 2022-160583 | A | 19 October 2022 |
| | | | | JP | 2023-038373 | A | 16 March 2023 |
| | | | | JP | 7242074 | B2 | 20 March 2023 |
| | | | | JP | 7442853 | B2 | 05 March 2024 |
| | | | | JP | 7508129 | B2 | 01 July 2024 |
| | | | | KR | 10-2020-0026291 | A | 10 March 2020 |
| | | | | KR | 10-2022-0037525 | A | 24 March 2022 |
| | | | | KR | 10-2022-0041216 | A | 31 March 2022 |
| | | | | KR | 10-2024-0042241 | A | 01 April 2024 |
| | | | | KR | 10-2374139 | B1 | 15 March 2022 |
| | | | | KR | 10-2443893 | B1 | 19 September 2022 |
| | | | | KR | 10-2554096 | B1 | 12 July 2023 |
| | | | | KR | 10-2651563 | B1 | 28 March 2024 |
| | | | | PL | 3664338 | T3 | 09 January 2023 |
| | | | | US | 11533131 | B2 | 20 December 2022 |

Form PCT/ISA/210 (patent family annex) (July 2022)

**INTERNATIONAL SEARCH REPORT**
Information on patent family members

International application No.

**PCT/KR2024/009935**

| Patent document cited in search report | | | Publication date (day/month/year) | Patent family member(s) | | | Publication date (day/month/year) |
|---|---|---|---|---|---|---|---|
| | | | | US | 2020-0295878 | A1 | 17 September 2020 |
| | | | | US | 2022-0368462 | A1 | 17 November 2022 |
| | | | | US | 2022-0376832 | A1 | 24 November 2022 |
| | | | | WO | 2019-027308 | A1 | 07 February 2019 |
| WO | 2022-206364 | A1 | 06 October 2022 | CN | 115189842 | A | 14 October 2022 |
| | | | | CN | 115189842 | B | 05 September 2023 |
| | | | | CN | 116827504 | A | 29 September 2023 |
| | | | | EP | 4319015 | A1 | 07 February 2024 |
| | | | | JP | 2024-511541 | A | 13 March 2024 |
| | | | | KR | 10-2023-0160399 | A | 23 November 2023 |
| | | | | US | 2024-0195534 | A1 | 13 June 2024 |

Form PCT/ISA/210 (patent family annex) (July 2022)